(19) Europäisches Patentamt / European Patent Office / Office européen des brevets

(11) **EP 4 503 607 A1**

(12) **EUROPEAN PATENT APPLICATION**
published in accordance with Art. 153(4) EPC

(43) Date of publication:
**05.02.2025 Bulletin 2025/06**

(21) Application number: **23781124.5**

(22) Date of filing: **03.01.2023**

(51) International Patent Classification (IPC):
*H04N 19/13* (2014.01)    *H04N 19/70* (2014.01)
*H04N 19/132* (2014.01)    *H04N 19/18* (2014.01)
*H04N 19/176* (2014.01)

(52) Cooperative Patent Classification (CPC):
**H04N 19/13; H04N 19/132; H04N 19/176;**
**H04N 19/18; H04N 19/70**

(86) International application number:
**PCT/KR2023/000097**

(87) International publication number:
**WO 2023/191261 (05.10.2023 Gazette 2023/40)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **30.03.2022  US 202263325571 P**

(71) Applicant: **LG Electronics Inc.**
**Yeongdeungpo-gu**
**Seoul 07336 (KR)**

(72) Inventors:
• **CHOI, Jungah**
  **Seoul 06772 (KR)**
• **YOO, Sunmi**
  **Seoul 06772 (KR)**
• **LIM, Jaehyun**
  **Seoul 06772 (KR)**
• **CHOI, Jangwon**
  **Seoul 06772 (KR)**
• **KIM, Seunghwan**
  **Seoul 06772 (KR)**

(74) Representative: **Maikowski & Ninnemann**
**Patentanwälte Partnerschaft mbB**
**Postfach 15 09 20**
**10671 Berlin (DE)**

(54) **METHOD AND DEVICE FOR CODING RESIDUAL INFORMATION IN IMAGE CODING SYSTEM**

(57)    According to the present disclosure, an image decoding method performed by a decoding device comprises the steps of: receiving a bitstream including residual information on a current block; deriving the maximum number of context coded bins related to the residual information; decoding syntax elements included in the residual information on the basis of the maximum number of context coded bins; deriving transform coefficients for the current block on the basis of the decoded syntax elements; deriving residual samples for the current block on the basis of the transform coefficients; and generating reconstruction samples for the current block on the basis of the residual samples for the current block, wherein the maximum number of context coded bins is derived on the basis of a position of a last significant coefficient of the current block.

FIG. 11

Receive a bitstream that includes residual information for the current block — S1100

Derive the maximum number of context-coded bins related to the residual information — S1110

Decode the syntax elements included in the residual information based on the maximum number of context coded bins — S1120

Derive the transform coefficients for the current block based on the decoded syntax elements — S1130

Derive the residual samples for the current block based on the transform coefficients — S1140

Generate reconstructed samples for the current block based on the residual samples for the current block — S1150

**Description**

**TECHNICAL FIELD**

This document relates to image coding technology, and more specifically, to a method and device for coding residual information in an image coding system.

**BACKGROUND ART**

Recently, the demand for high resolution, high quality image/video such as 4K, 8K or more Ultra High Definition (UHD) video/image is increasing in various fields. As the video/image resolution or quality becomes higher, relatively more amount of information or bits are transmitted than for conventional video/image data. Therefore, if video/image data are transmitted via a medium such as an existing wired/wireless broadband line or stored in a legacy storage medium, costs for transmission and storage are readily increased.

Moreover, interests and demand are growing for virtual reality (VR) and artificial reality (AR) contents, and immersive media such as hologram; and broadcasting of images/videos exhibiting image/video characteristics different from those of an actual video/image, such as game images/videos, are also growing.

Therefore, a highly efficient image compression technique is required to effectively compress and transmit, store, or play high resolution, high quality video/image showing various characteristics as described above.

Additionally, technology is required to reduce the throughput of residual coding by limiting the number of context coded bins used when performing coding using CABAC.

**DISCLOSURE**

**TECHNICAL SOLUTION**

According to an embodiment of this document, an image decoding method performed by a decoding device is provided. The method includes receiving a bitstream including residual information for the current block, deriving the maximum number of context coded bins related to the residual information, decoding the syntax elements included in the residual information based on the maximum number of context coded bins , deriving transform coefficients for the current block based on the decoded syntax elements, deriving residual samples for the current block based on the transform coefficients, and generating reconstructed samples for the current block based on the residual samples for the current block. The maximum number of context coded bins is characterized by being derived based on the position of the last significant coefficient of the current block.

According to another embodiment of this document, an encoding method performed by an encoding device is provided. The method includes deriving residual samples for the current block, deriving transform coefficients based on the residual samples for the current block, deriving the number of context coded bins for the syntax elements related to the transform coefficients, and encoding the residual information for the current block, which includes the syntax elements, to generate a bitstream based on the maximum number of context coded bins. The maximum number of context coded bins is characterized by being derived based on the position of the last significant coefficient of the current block.

According to another embodiment of this document, a computer-readable digital storage medium is provided. The digital storage medium stores a bitstream generated by a specific method, where the specific method includes deriving residual samples for the current block, deriving transform coefficients based on the residual samples for the current block, deriving the number of context coded bins for the syntax elements related to the transform coefficients, and encoding the residual information for the current block, which includes the syntax elements, to generate a bitstream based on the maximum number of context coded bins. The maximum number of context coded bins is characterized by being derived based on the position of the last significant coefficient of the current block.

According to another embodiment of this document, a method for transmitting data for an image is provided. The transmission method includes generating a bitstream based on a process that includes deriving residual samples for the current block, deriving transform coefficients based on the residual samples for the current block, deriving the number of context coded bins for the syntax elements related to the transform coefficients, and encoding the residual information for the current block, which includes the syntax elements, to generate a bitstream based on the maximum number of context coded bins , and transmitting the data that includes the bitstream. The maximum number of context coded bins is characterized by being derived based on the position of the last significant coefficient of the current block.

According to yet another embodiment of the present disclosure, provided herein is a computer readable digital recording medium having encoded information or encoded video/image information stored therein that allows a video/-image decoding method, which is disclosed in at least one of the embodiments of the present disclosure, to be performed by a decoding apparatus.

According to yet another embodiment of the present disclosure, provided herein is a transmitting method and transmitting apparatus for a bitstream that is generated according to an video/image encoding method, which is disclosed in at least one of the embodiments of the present disclosure.

**BRIEF DESCRIPTION OF THE DRAWINGS**

FIG. 1 schematically illustrates an example of a video/image coding device to which embodiments of the present disclosure are applicable.
FIG. 2 is a schematic diagram illustrating a configuration of a video/image encoding apparatus to which the embodiment(s) of the present disclosure may be applied.
FIG. 3 is a schematic diagram illustrating a configuration of a video/image decoding apparatus to which the embodiment(s) of the present disclosure may be applied.
FIG. 4 schematically shows a hierarchical structure for coded video/image.
FIG. 5 exemplarily represents context-adaptive binary arithmetic coding (CABAC) for encoding a syntax element.
FIG. 6 is a diagram illustrating an example of transform coefficients within a 4x4 block.
FIG. 7 and FIG. 8 exemplarily represent methods for controlling the number of context coded bins proposed in this document.
FIG. 9 and FIG. 10 schematically illustrates an example of a video/image encoding method and related components according to an embodiment of the present disclosure.
FIG. 11 and FIG. 12 schematically illustrates an example of a video/image decoding method and related components according to an embodiment of the present disclosure.
FIG. 13 illustrates an example of a content streaming system to which embodiments disclosed in the present disclosure may be applied.

**MODE FOR INVENTION**

The present disclosure may be modified in various forms, and specific embodiments thereof will be described and illustrated in the drawings. However, the embodiments are not intended for limiting the disclosure. The terms used in the following description are used to merely describe specific embodiments but are not intended to limit the disclosure. An expression of a singular number includes an expression of the plural number, so long as it is clearly read differently. The terms such as "include" and "have" are intended to indicate that features, numbers, steps, operations, elements, components, or combinations thereof used in the following description exist and it should be thus understood that the possibility of existence or addition of one or more different features, numbers, steps, operations, elements, components, or combinations thereof is not excluded.

Meanwhile, elements in the drawings described in the disclosure are independently drawn for the purpose of convenience for explanation of different specific functions, and do not mean that the elements are embodied by independent hardware or independent software. For example, two or more elements of the elements may be combined to form a single element, or one element may be partitioned into plural elements. The embodiments in which the elements are combined and/or partitioned belong to the disclosure without departing from the concept of the disclosure.

Hereinafter, embodiments of the present disclosure will be described in detail with reference to the accompanying drawings. In addition, like reference numerals are used to indicate like elements throughout the drawings, and the same descriptions on the like elements will be omitted.

Present disclosure relates to video/image coding. For example, the methods/embodiments disclosed in the present disclosure may be related to the versatile video coding (VVC) standard (ITU-T Rec. H.266), the next-generation video/image coding standard after VVC, or other video coding related standards (for example, the High Efficiency Video Coding (HEVC) standard (ITU-T Rec. H.265), essential video coding (EVC) standard, AVS2 standard, etc.).

Present disclosure relates to video/image coding. For example, the methods/embodiments disclosed in the present disclosure may be applied to a method disclosed in the versatile video coding (VVC) standard, the essential video coding (EVC) standard, the AOMedia Video 1 (AV1) standard, the 2nd generation of audio video coding standard (AVS2), or the next generation video/image coding standard (e.g., H.267 or H.268, etc.).

Present disclosure presents various embodiments of video/image coding, and the embodiments may be performed in combination with each other unless otherwise mentioned.

In the present disclosure, video may refer to a series of images over time. Picture generally refers to a unit representing one image in a specific time zone, and a subpicture/slice/tile is a unit constituting part of a picture in coding. The subpicture/slice/tile may include one or more coding tree units (CTUs). One picture may consist of one or more subpictures/slices/tiles. One picture may consist of one or more tile groups. One tile group may include one or more tiles. A brick may represent a rectangular region of CTU rows within a tile in a picture. A tile may be partitioned into multiple bricks, each of which consisting of one or more CTU rows within the tile. A tile that is not partitioned into multiple bricks may be also referred to as a brick. A brick scan is a specific sequential ordering of CTUs partitioning a picture in which the CTUs are ordered consecutively in CTU raster scan in a brick, bricks within a tile are ordered consecutively in a raster scan of the bricks of the tile, and tiles in a picture are ordered consecutively in a raster scan of the tiles of the picture. In addition, a subpicture may represent a rectangular region of one or more slices within a picture. That is, a subpicture contains one or more slices that collectively cover a rectangular region of a picture. A tile is a rectangular region of CTUs within a particular tile column and a particular tile row in a picture. The tile column is a rectangular region of CTUs having a height equal to the height of the picture and a width specified by syntax elements in the picture parameter set. The tile row is a rectangular region of CTUs having a height specified by syntax elements in the picture parameter set and a width equal to the width of the picture. A tile scan is a specific sequential ordering of CTUs partitioning a picture in which the CTUs are ordered consecutively in CTU raster scan in a tile whereas tiles in a picture are ordered consecutively in a raster scan of the tiles of the picture. A slice includes an integer number of bricks of a picture that may be exclusively contained in a single NAL unit. A slice may consist of either a number of complete tiles or only a consecutive sequence of complete bricks of one tile. Tile groups and slices may be used interchangeably in the present disclosure. For example, in the present disclosure, a tile group/tile group header may be called a slice/slice header.

A pixel or a pel may mean a smallest unit constituting one picture (or image). Also, 'sample' may be used as a term corresponding to a pixel. A sample may generally represent a pixel or a value of a pixel, and may represent only a pixel/pixel value of a luma component or only a pixel/pixel value of a chroma component.

A unit may represent a basic unit of image processing. The unit may include at least one of a specific region of the picture and information related to the region. One unit may include one luma block and two chroma (ex. cb, cr) blocks. The unit may be used interchangeably with terms such as block or area in some cases. In a general case, an M×N block may include samples (or sample arrays) or a set (or array) of transform coefficients of M columns and N rows.

In the present description, "A or B" may mean "only A", "only B" or "both A and B". In other words, in the present specification, "A or B" may be interpreted as "A and/or B". For example, "A, B or C" herein means "only A", "only B", "only C", or "any and any combination of A, B and C".

A slash (/) or a comma (comma) used in the present description may mean "and/or". For example, "A/B" may mean "A and/or B". Accordingly, "A/B" may mean "only A", "only B", or "both A and B". For example, "A, B, C" may mean "A, B, or C".

In the present description, "at least one of A and B" may mean "only A", "only B", or "both A and B". In addition, in the present description, the expression "at least one of A or B" or "at least one of A and/or B" may be interpreted the same as "at least one of A and B".

In addition, in the present description, "at least one of A, B and C" means "only A", "only B", "only C", or "any combination of A, B and C". Also, "at least one of A, B or C" or "at least one of A, B and/or C" may mean "at least one of A, B and C".

In addition, parentheses used in the present description may mean "for example". Specifically, when "prediction (intra prediction)" is indicated, "intra prediction" may be proposed as an example of "prediction". In other words, "prediction" in the present description is not limited to "intra prediction", and "intra prediction" may be proposed as an example of "prediction". Also, even when "prediction (ie, intra prediction)" is indicated, "intra prediction" may be proposed as an example of "prediction".

In the present description, technical features that are individually described within one drawing may be implemented individually or may be implemented at the same time.

The following drawings were created to explain a specific example of the present description. Since the names of specific devices described in the drawings or the names of specific signals/messages/fields are presented by way of example, the technical features of the present description are not limited to the specific names used in the following drawings.

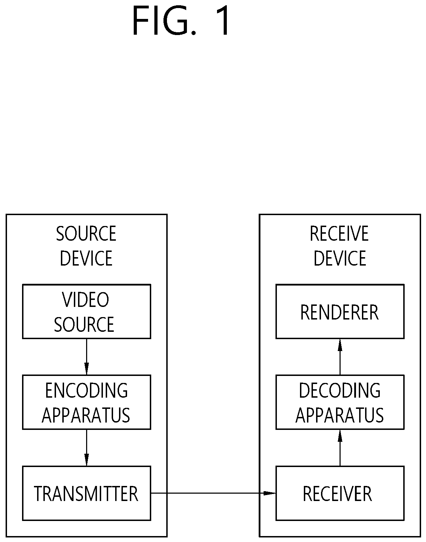

FIG. 1 schematically illustrates an example of a video/image coding device to which embodiments of the present disclosure are applicable.

Referring to FIG. 1, a video/image coding system may include a first device (source device) and a second device (receiving device). The source device may deliver encoded video/image information or data in the form of a file or streaming to the receiving device via a digital storage medium or network.

The source device may include a video source, an encoding apparatus, and a transmitter. The receiving device may include a receiver, a decoding apparatus, and a renderer. The encoding apparatus may be called a video/image encoding apparatus, and the decoding apparatus may be called a video/image decoding apparatus. The transmitter may be included in the encoding apparatus. The receiver may be included in the decoding apparatus. The renderer may include a display, and the display may be configured as a separate device or an external component.

The video source may acquire video/image through a process of capturing, synthesizing, or generating the video/image. The video source may include a video/image capture device and/or a video/image generating device. The video/image capture device may include, for example, one or more cameras, video/image archives including previously captured video/images, and the like. The video/image generating device may include, for example, computers, tablets and smartphones, and may (electronically) generate video/images. For example, a virtual video/image may be generated through a computer or the like. In this case, the video/image capturing process may be replaced by a process of generating related data.

The encoding apparatus may encode input image/image. The encoding apparatus may perform a series of procedures such as prediction, transform, and quantization for compression and coding efficiency. The encoded data (encoded video/image information) may be output in the form of a bitstream.

The transmitter may transmit the encoded image/image information or data output in the form of a bitstream to the receiver of the receiving device through a digital storage medium or a network in the form of a file or streaming. The digital storage medium may include various storage mediums such as USB, SD, CD, DVD, Blu-ray, HDD, SSD, and the like. The transmitter may include an element for generating a media file through a predetermined file format and may include an element for transmission through a broadcast/communication network. The receiver may receive/extract the bitstream and transmit the received bitstream to the decoding apparatus.

The decoding apparatus may decode the video/image by performing a series of procedures such as dequantization, inverse transform, and prediction corresponding to the operation of the encoding apparatus.

The renderer may render the decoded video/image. The rendered video/image may be displayed through the display.

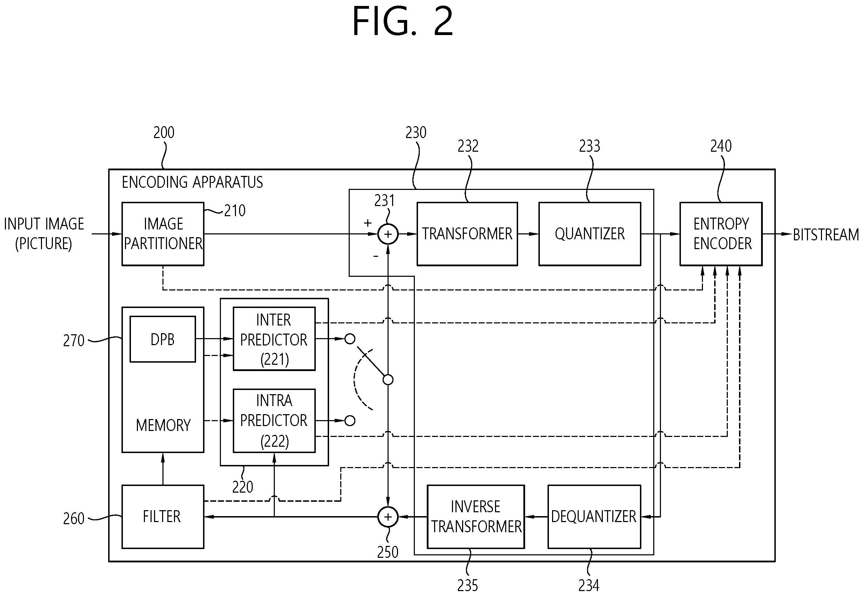

FIG. 2 is a schematic diagram illustrating a configuration of a video/image encoding apparatus to which the present document may be applied. Hereinafter, the video encoding apparatus may include an image encoding apparatus.

Referring to FIG. 2, the encoding apparatus 200 includes an image partitioner 210, a predictor 220, a residual processor 230, and an entropy encoder 240, an adder 250, a filter 260, and a memory 270. The predictor 220 may include an inter predictor 221 and an intra predictor 222. The residual processor 230 may include a transformer 232, a quantizer 233, a dequantizer 234, and an inverse transformer 235. The residual processor 230 may further include a subtractor 231. The adder 250 may be called a reconstructor or a reconstructed block generator. The image partitioner 210, the predictor 220, the residual processor 230, the entropy encoder 240, the adder 250, and the filter 260 may be configured by at least one hardware component (ex. An encoder chipset or processor) according to an embodiment. In addition, the memory 270 may include a decoded picture buffer (DPB) or may be configured by a digital storage medium. The hardware component may further include the memory 270 as an internal/external component.

The image partitioner 210 may partition an input image (or a picture or a frame) input to the encoding apparatus 200 into one or more processors. For example, the processor may be called a coding unit (CU). In this case, the coding unit may be recursively partitioned according to a quad-tree binary-tree ternary-tree (QTBTTT) structure from a coding tree unit (CTU) or a largest coding unit (LCU). For example, one coding unit may be partitioned into a plurality of coding units of a deeper depth based on a quad tree structure, a binary tree structure, and/or a ternary structure. In this case, for example, the quad tree structure may be applied first and the binary tree structure and/or ternary structure may be applied later. Alternatively, the binary tree structure may be applied first. The coding process according to the present disclosure may be performed based on the final coding unit that is no longer partitioned. In this case, the largest coding unit may be used as the final coding unit based on coding efficiency according to image characteristics, or if necessary, the coding unit may be recursively partitioned into coding units of deeper depth and a coding unit having an optimal size may be used as the final coding unit. Here, the coding procedure may include a process of prediction, transform, and reconstruction, which will be described later. As another example, the processor may further include a prediction unit (PU) or a transform unit (TU). In this case, the prediction unit and the transform unit may be split or partitioned from the aforementioned final coding unit. The prediction unit may be a unit of sample prediction, and the transform unit may be a unit for deriving a transform coefficient and/or a unit for deriving a residual signal from the transform coefficient.

The unit may be used interchangeably with terms such as block or area in some cases. In a general case, an M×N block may represent a set of samples or transform coefficients composed of M columns and N rows. A sample may generally represent a pixel or a value of a pixel, may represent only a pixel/pixel value of a luma component or represent only a pixel/pixel value of a chroma component. A sample may be used as a term corresponding to one picture (or image) for a pixel or a pel.

In the subtractor 231, a prediction signal (predicted block, prediction samples or prediction sample array) output from the predictor 220 is subtracted from an input image signal (original block, original samples or original sample array) to generate a residual signal (residual block, residual samples or residual sample array), and the generated residual signal is transmitted to the transformer 232. The predictor 220 may perform prediction on a block to be processed (hereinafter, referred to as a current block) and generate a predicted block including prediction samples for the current block. The predictor 220 may determine whether intra prediction or inter prediction is applied on a current block or CU basis. As described later in the description of each prediction mode, the predictor may generate various information related to prediction, such as prediction mode information, and transmit the generated information to the entropy encoder 240. The information on the prediction may be encoded in the entropy encoder 240 and output in the form of a bitstream.

The intra predictor 222 may predict the current block by referring to the samples in the current picture. The referred samples may be located in the neighborhood of the current block or may be located apart according to the prediction mode. In the intra prediction, prediction modes may include a plurality of non-directional modes and a plurality of directional modes. The non-directional mode may include, for example, a DC mode and a planar mode. The directional mode may include, for example, 33 directional prediction modes or 65 directional prediction modes according to the degree of detail of the prediction direction. However, this is merely an example, more or less directional prediction modes may be used depending on a setting. The intra predictor 222 may determine the prediction mode applied to the current block by using a prediction mode applied to a neighboring block.

The inter predictor 221 may derive a predicted block for the current block based on a reference block (reference sample array) specified by a motion vector on a reference picture. Here, in order to reduce the amount of motion information transmitted in the inter prediction mode, the motion information may be predicted in units of blocks, sub-blocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. The reference picture including the reference block and the reference picture including the temporal neighboring block may be the same or different. The temporal neighboring block may be called a collocated reference block, a co-located CU (colCU), and the like, and the reference picture including the temporal neighboring block may be called a collocated picture (colPic). For example, the inter predictor 221 may configure a motion information candidate list based on neighboring blocks and generate information indicating which candidate is used to derive a motion vector and/or a reference picture index of the current block. Inter prediction may be performed based on various prediction modes. For example, in the case of a skip mode and a merge mode, the inter predictor 221 may use motion information of the neighboring block as motion information of the current block. In the skip mode, unlike the merge mode, the residual signal may not be transmitted. In the case of the motion vector prediction (MVP) mode, the motion vector of the neighboring block may be used as a motion vector predictor and the motion vector of the current block may be indicated by signaling a motion vector difference.

The predictor 220 may generate a prediction signal based on various prediction methods described below. For example, the predictor may not only apply intra prediction or inter prediction to predict one block but also simultaneously apply both intra prediction and inter prediction. This may be called combined inter and intra prediction (CIIP). In addition, the predictor may perform an intra block copy (IBC) prediction mode. The IBC, for example, may be used for content image/video coding of a game or the like, for example, screen content coding (SCC). The IBC basically performs prediction in the current picture but may be performed similarly to inter prediction in that a reference block is derived in the current picture. That is, the IBC may use at least one of the inter prediction techniques described in the present disclosure.

The prediction signal generated by the inter predictor 221 and/or the intra predictor 222 may be used to generate a reconstructed signal or to generate a residual signal. The transformer 232 may generate transform coefficients by applying a transform technique to the residual signal. For example, the transform technique may include a discrete cosine transform (DCT), a discrete sine transform (DST), a graph-based transform (GBT), or a conditionally non-linear transform (CNT), etc. Here, the GBT means transform obtained from a graph when relationship information between pixels is represented by the graph. The CNT refers to transform generated based on a prediction signal generated using all previously reconstructed pixels. In addition, the transform process may be applied to square pixel blocks having the same size or may be applied to non-square pixel blocks each having a different size.

The quantizer 233 may quantize the transform coefficients and transmit them to the entropy encoder 240 and the entropy encoder 240 may encode the quantized signal (information on the quantized transform coefficients) and output a bitstream. The information on the quantized transform coefficients may be referred to as residual information. The quantizer 233 may rearrange block type quantized transform coefficients into a one-dimensional vector form based on a coefficient scanning order and generate information on the quantized transform coefficients based on the quantized transform coefficients in the one-dimensional vector form. Information on transform coefficients may be generated. The entropy encoder 240 may perform various encoding methods such as, for example, exponential Golomb, context-adaptive variable length coding (CAVLC), context-adaptive binary arithmetic coding (CABAC), and the like. The entropy encoder 240 may encode information necessary for video/image reconstruction other than quantized transform coefficients (e.g., values of syntax elements, etc.) together or separately. Encoded information (e.g., encoded video/image information) may be transmitted or stored in units of NAL (network abstraction layer) unit in the form of a bitstream. The video/image information may further include information on various parameter sets such as an adaptation parameter set (APS), a picture parameter set (PPS), a sequence parameter set (SPS), or a video parameter set (VPS). In addition, the video/image information may further include general constraint information. In the present disclosure, information and/or syntax elements to be described later may be encoded through the above-described encoding process and included in the bitstream. The bitstream may be transmitted over a network or may be stored in a digital storage medium. The network may include a broadcasting network and/or a communication network, and the digital storage medium may include various storage media such as USB, SD, CD, DVD, Blu-ray, HDD, SSD, and the like. A transmitter (not shown) transmitting a signal output from the entropy encoder 240 and/or a storage unit (not shown) storing the signal may be included as internal/external element of the encoding apparatus 200, and alternatively, the transmitter may be included in the entropy encoder 240.

The quantized transform coefficients output from the quantizer 233 may be used to generate a prediction signal. For example, the residual signal (residual block or residual samples) may be reconstructed by applying dequantization and inverse transform to the quantized transform coefficients through the dequantizer 234 and the inverse transformer 235. The adder 250 adds the reconstructed residual signal to the prediction signal output from the predictor 220 to generate a reconstructed signal (reconstructed picture, reconstructed block, reconstructed sample array). If there is no residual for the block to be processed, such as a case where the skip mode is applied, the predicted block may be used as the reconstructed block. The generated reconstructed signal may be used for intra prediction of a next block to be processed in the current picture and may be used for inter prediction of a next picture through filtering as described below.

Meanwhile, luma mapping with chroma scaling (LMCS) may be applied during picture encoding and/or reconstruction.

The filter 260 may improve subjective/objective image quality by applying filtering to the reconstructed signal. For example, the filter 260 may generate a modified reconstructed picture by applying various filtering methods to the reconstructed picture and store the modified reconstructed picture in the memory 270, specifically, a DPB of the memory 270. The various filtering methods may include, for example, deblocking filtering, a sample adaptive offset (SAO), an adaptive loop filter, a bilateral filter, and the like. The filter 260 may generate various information related to the filtering and transmit the generated information to the entropy encoder 290 as described later in the description of each filtering method. The information related to the filtering may be encoded by the entropy encoder 290 and output in the form of a bitstream.

The modified reconstructed picture transmitted to the memory 270 may be used as the reference picture in the inter predictor 260. When the inter prediction is applied through the encoding apparatus, prediction mismatch between the encoding apparatus 200 and the decoding apparatus 300 may be avoided and encoding efficiency may be improved.

The DPB of the memory 270 DPB may store the modified reconstructed picture for use as a reference picture in the inter predictor 221. The memory 270 may store the motion information of the block from which the motion information in the current picture is derived (or encoded) and/or the motion information of the blocks in the picture that have already been reconstructed. The stored motion information may be transmitted to the inter predictor 221 and used as the motion information of the spatial neighboring block or the motion information of the temporal neighboring block. The memory 270 may store reconstructed samples of reconstructed blocks in the current picture and may transfer the reconstructed samples to the intra predictor 222.

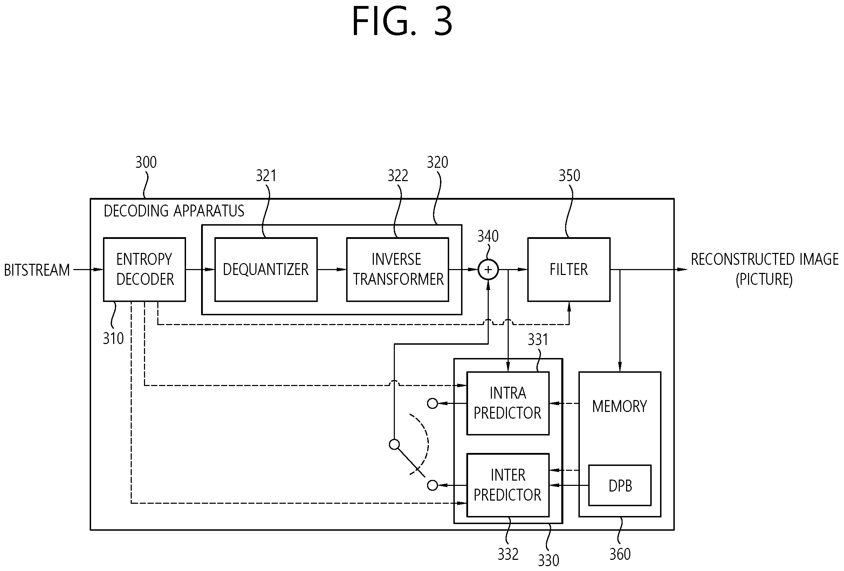

FIG. 3 is a schematic diagram illustrating a configuration of a video/image decoding apparatus to which the present document may be applied.

Referring to FIG. 3, the decoding apparatus 300 may include an entropy decoder 310, a residual processor 320, a predictor 330, an adder 340, a filter 350, a memory 360. The predictor 330 may include an inter predictor 331 and an intra predictor 332. The residual processor 320 may include a dequantizer 333 and an inverse transformer 322. The entropy decoder 310, the residual processor 320, the predictor 330, the adder 340, and the filter 350 may be configured by a hardware component (ex. A decoder chipset or a processor) according to an embodiment. In addition, the memory 360 may include a decoded picture buffer (DPB) or may be configured by a digital storage medium. The hardware component may further include the memory 360 as an internal/external component.

When a bitstream including video/image information is input, the decoding apparatus 300 may reconstruct an image corresponding to a process in which the video/image information is processed in the encoding apparatus of FIG. 2. For example, the decoding apparatus 300 may derive units/blocks based on block partition related information obtained from the bitstream. The decoding apparatus 300 may perform decoding using a processor applied in the encoding apparatus. Thus, the processor of decoding may be a coding unit, for example, and the coding unit may be partitioned according to a quad tree structure, binary tree structure and/or ternary tree structure from the coding tree unit or the largest coding unit. One or more transform units may be derived from the coding unit. The reconstructed image signal decoded and output through the decoding apparatus 300 may be reproduced through a reproducing apparatus.

The decoding apparatus 300 may receive a signal output from the encoding apparatus of FIG. 2 in the form of a bitstream, and the received signal may be decoded through the entropy decoder 310. For example, the entropy decoder 310 may parse the bitstream to derive information (e.g., video/image information) necessary for image reconstruction (or picture reconstruction). The video/image information may further include information on various parameter sets such as an adaptation parameter set (APS), a picture parameter set (PPS), a sequence parameter set (SPS), or a video parameter set (VPS). In addition, the video/image information may further include general constraint information. The decoding apparatus may further decode picture based on the information on the parameter set and/or the general constraint information. Signaled/received information and/or syntax elements described later in the present disclosure may be decoded may decode the decoding process and obtained from the bitstream. For example, the entropy decoder 310 decodes the information in the bitstream based on a coding method such as exponential Golomb coding, CAVLC, or CABAC, and output syntax elements required for image reconstruction and quantized values of transform coefficients for residual. More specifically, the CABAC entropy decoding method may receive a bin corresponding to each syntax element in the bitstream, determine a context model using a decoding target syntax element information, decoding information of a decoding target block or information of a symbol/bin decoded in a previous stage, and perform an arithmetic decoding on the bin by predicting a probability of occurrence of a bin according to the determined context model, and generate a symbol corresponding to the value of each syntax element. In this case, the CABAC entropy decoding method may update the context model by using the information of the decoded symbol/bin for a context model of a next symbol/bin after determining the context model. The information related to the prediction among the information decoded by the entropy decoder 310 may be provided to the predictor 330, and information on the residual on which the entropy decoding was performed in the entropy decoder 310, that is, the quantized transform coefficients and related parameter information, may be input to the dequantizer 321. In addition, information on filtering among information decoded by the entropy decoder 310 may be provided to the filter 350. Meanwhile, a receiver (not shown) for receiving a signal output from the encoding apparatus may be further configured as an internal/external element of the decoding apparatus 300, or the receiver may be a component of the entropy decoder 310. Meanwhile, the decoding apparatus according to the present disclosure may be referred to as a video/image/picture decoding apparatus, and the decoding apparatus may be classified into an information decoder (video/image/picture information decoder) and a sample decoder (video/image/picture sample decoder). The information decoder may include the entropy decoder 310, and the sample decoder may include at least one of the dequantizer 321, the inverse transformer 322, the predictor 330, the adder 340, the filter 350, and the memory 360.

The dequantizer 321 may dequantize the quantized transform coefficients and output the transform coefficients. The dequantizer 321 may rearrange the quantized transform coefficients in the form of a two-dimensional block form. In this case, the rearrangement may be performed based on the coefficient scanning order performed in the encoding apparatus. The dequantizer 321 may perform dequantization on the quantized transform coefficients by using a quantization parameter (ex. quantization step size information) and obtain transform coefficients.

The inverse transformer 322 inversely transforms the transform coefficients to obtain a residual signal (residual block, residual sample array).

The predictor may perform prediction on the current block and generate a predicted block including prediction samples for the current block. The predictor may determine whether intra prediction or inter prediction is applied to the current block based on the information on the prediction output from the entropy decoder 310 and may determine a specific intra/inter prediction mode.

The predictor may generate a prediction signal based on various prediction methods described below. For example, the predictor may not only apply intra prediction or inter prediction to predict one block but also simultaneously apply intra prediction and inter prediction. This may be called combined inter and intra prediction (CIIP). In addition, the predictor may perform an intra block copy (IBC) for prediction of a block. The IBC may be used for content image/video coding of a game or the like, for example, screen content coding (SCC). The IBC basically performs prediction in the current picture but may be performed similarly to inter prediction in that a reference block is derived in the current picture. That is, the IBC may use at least one of the inter prediction techniques described in the present disclosure.

The intra predictor 332 may predict the current block by referring to the samples in the current picture. The referred samples may be located in the neighborhood of the current block or may be located apart according to the prediction mode. In the intra prediction, prediction modes may include a plurality of non-directional modes and a plurality of directional modes. The intra predictor 332 may determine the prediction mode applied to the current block by using a prediction mode applied to a neighboring block.

The inter predictor 331 may derive a predicted block for the current block based on a reference block (reference sample array) specified by a motion vector on a reference picture. In this case, in order to reduce the amount of motion information transmitted in the inter prediction mode, motion information may be predicted in units of blocks, sub-blocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. For example, the inter predictor 331 may configure a motion information candidate list based on neighboring blocks and derive a motion vector of the current block and/or a reference picture index based on the received candidate selection information. Inter prediction may be performed based on various prediction modes, and the information on the prediction may include information indicating a mode of inter prediction for the current block.

The adder 340 may generate a reconstructed signal (reconstructed picture, reconstructed block, reconstructed sample array) by adding the obtained residual signal to the prediction signal (predicted block, predicted sample array) output from the predictor (including the inter predictor 332 and/or the intra predictor 331). If there is no residual for the block to be processed, such as when the skip mode is applied, the predicted block may be used as the reconstructed block.

The adder 340 may be called reconstructor or a reconstructed block generator. The generated reconstructed signal may be used for intra prediction of a next block to be processed in the current picture, may be output through filtering as described below, or may be used for inter prediction of a next picture.

Meanwhile, luma mapping with chroma scaling (LMCS) may be applied in the picture decoding process.

The filter 350 may improve subjective/objective image quality by applying filtering to the reconstructed signal. For example, the filter 350 may generate a modified reconstructed picture by applying various filtering methods to the reconstructed picture and store the modified reconstructed picture in the memory 360, specifically, a DPB of the memory 360. The various filtering methods may include, for example, deblocking filtering, a sample adaptive offset, an adaptive loop filter, a bilateral filter, and the like.

The (modified) reconstructed picture stored in the DPB of the memory 360 may be used as a reference picture in the inter predictor 331. The memory 360 may store the motion information of the block from which the motion information in the current picture is derived (or decoded) and/or the motion information of the blocks in the picture that have already been reconstructed. The stored motion information may be transmitted to the inter predictor 331 so as to be utilized as the motion information of the spatial neighboring block or the motion information of the temporal neighboring block. The memory 360 may store reconstructed samples of reconstructed blocks in the current picture and transfer the reconstructed samples to the intra predictor 332.

In this specification, the embodiments described in the predictor 330, the dequantizer 321, the inverse transformer 322, and the filter 350 of the decoding apparatus 300 may be applied to the same or correspond to to the predictor 220, the dequantizer 234, the inverse transformer 235, and the filter 260 of the encoding apparatus 200 respectively.

As described above, in performing video coding, prediction is performed to increase compression efficiency. Through this, it is possible to generate a predicted block including prediction samples for the current block, which is a block to be coded. Here, the predicted block includes prediction samples in the spatial domain (or pixel domain). The predicted block is derived in the same way from an encoding apparatus and a decoding apparatus, and the encoding apparatus can increase image coding efficiency by signaling information (residual information) between the original block and the predicted block to the decoding apparatus, not the original sample value of the original block itself. The decoding apparatus can derive a residual block containing residual samples based on the above residual information, combine the above residential block with the above predicted block to create a restore block containing restoration samples, and create a restore picture containing restoration blocks.

The residual information may be generated through a transform and quantization process. For example, the encoding apparatus may derive a residual block between the original block and the predicted block, derive transform coefficients by performing the transform process on the residual samples (residual sample array) included in the residual block, derive quantized transform coefficients by performing the quantization process on the transform coefficients, and signaling related residual information (through a bitstream) to the decoding apparatus. Here, the residual information may include information such as value information, position information, transform technique, transform kernel, quantization parameter of the quantized transform coefficients, etc. The decoding apparatus may perform a dequantization/inverse transform process based on the residual information and derive residual samples (or residual blocks). The decoding apparatus may generate a reconstructed picture based on the predicted block and the residual block. The encoding apparatus may also derive a residual block by dequantizing/inverse transforming quantized transform coefficients for reference to the inter-prediction of the picture, and generate a reconstructed picture based on this.

In the present disclosure, a quantized transform coefficient and a transform coefficient may be referred to as a transform coefficient and a scaled transform coefficient, respectively. In this case, the residual information may include information on transform coefficient(s), and the information on the transform coefficient(s) may be signaled through residual coding syntax. Transform coefficients may be derived based on the residual information (or the information on the transform coefficient(s)), and scaled transform coefficients may be derived by inverse transforming (scaling) on the transform coefficients. Residual samples may be derived based on the inverse transforming (transforming) on the scaled transform coefficients. This may be applied/expressed in other parts of the present disclosure as well.

In this document, quantized transform coefficients and transform coefficients may be referred to as transform coefficients and scaled transform coefficients, respectively. In this case, the residual information may include information on transform coefficient(s), and the information on the transform coefficient(s) may be signaled through residual coding syntax. Transform coefficients may be derived based on the residual information (or information about the transform coefficient(s)), and scaled transform coefficients may be derived through inverse transform (scaling) of the transform coefficients. Residual samples may be derived based on an inverse transform (transform) to the scaled transform coefficients. This may be applied/expressed in other parts of this document as well.

A predictor of the encoding apparatus/decoding apparatus may derive prediction samples by performing inter prediction on a block-by-block basis. Inter prediction can be a prediction derived in a manner that is dependent on data elements (e.g., sample values or motion information) of picture(s) other than the current picture. When inter prediction is applied to the current block, a predicted block (prediction sample array) for the current block may be derived based on a reference block (reference sample array) specified by a motion vector in a reference picture indicated by a reference picture index. In this case, in order to reduce the amount of motion information transmitted in the inter-prediction mode, motion information of the current block may be predicted in units of blocks, subblocks, or samples based on correlation of motion information between neighboring blocks and the current block. The motion information may include a motion vector and a reference picture index. The motion information may further include inter prediction type (L0 prediction, L1 prediction, Bi prediction, etc.) information. When inter prediction is applied, the neighboring block may include a spatial neighboring block present in the current picture and a temporal neighboring block present in the reference picture. A reference picture including the reference block and a reference picture including the temporal neighboring block may be the same or different. The temporal neighboring block may be called a collocated reference block, a collocated CU (colCU), and the like, and a reference picture including the temporal neighboring block may be called a collocated picture (colPic). For example, a motion information candidate list may be constructed based on neighboring blocks of the current block, and a flag or index information indicating which candidate is selected (used) to derive the motion vector and/or reference picture index of the current block may be signaled. Inter prediction may be performed based on various prediction modes. For example, in the case of skip mode and merge mode, motion information of a current block may be the same as motion information of a selected neighboring block. In the case of the skip mode, the residual signal may not be transmitted unlike the merge mode. In the case of a motion vector prediction (MVP) mode, a motion vector of a selected neighboring block is used as a motion vector predictor, and a motion vector difference may be signaled. In this case, the motion vector of the current block may be derived using the sum of the motion vector predictor and the motion vector difference.

The motion information may include L0 motion information and/or L1 motion information according to an inter prediction type (L0 prediction, L1 prediction, Bi prediction, etc.). A motion vector in the L0 direction may be referred to as an L0 motion vector or MVL0, and a motion vector in the L1 direction may be referred to as an L1 motion vector or MVL1. Prediction based on the L0 motion vector may be called L0 prediction, prediction based on the L1 motion vector may be called L1 prediction, and prediction based on both the L0 motion vector and the L1 motion vector may be called Bi prediction. Here, the L0 motion vector may indicate a motion vector related to the reference picture list L0 (L0), and the L1 motion vector may indicate a motion vector related to the reference picture list L1 (L1). The reference picture list L0 may include pictures prior to the current picture in output order as reference pictures, and the reference picture list L1 may include pictures subsequent to the current picture in output order. The previous pictures may be referred to as forward (reference) pictures, and the subsequent pictures may be referred to as backward (reference) pictures. The reference picture list L0 may further include subsequent pictures in an output order as reference pictures than the current picture. In this case, the previous pictures in the reference picture list L0 may be indexed first, and the later pictures may be indexed next. The reference picture list L1 may further include, as reference pictures, pictures previous to the current picture in output order. In this case, the subsequent pictures in the reference picture list 1 may be indexed first, and the previous pictures may be indexed next. Here, the output order may correspond to a picture order count (POC) order.

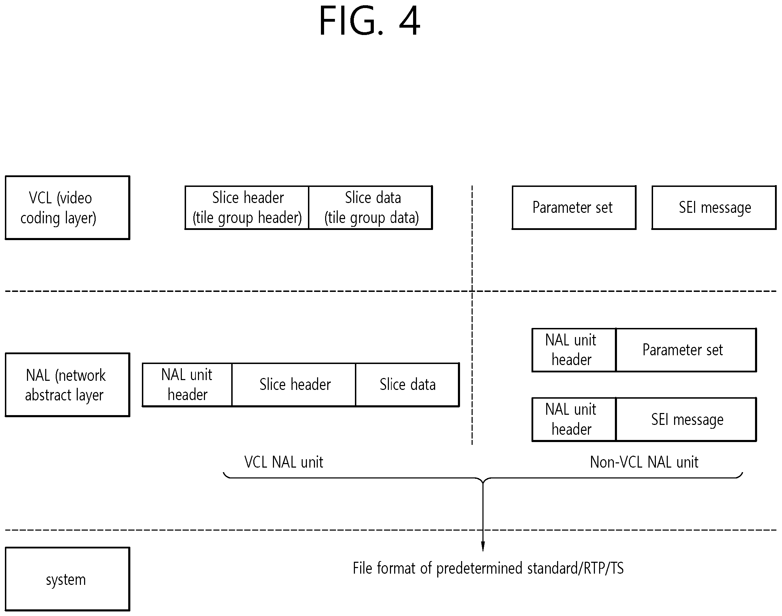

FIG. 4 exemplarily illustrates a layer structure for a coded video/image.

Referring to FIG. 4, a coded video/image is divided into a video coding layer (VCL) that performs decoding processing of a video/image and handles the decoding processing, a lower system that transmits and stores coded information, and a network abstraction layer (NAL) which exists between the VCL and the lower system, and serves to perform a network adaptation function.

VCL data including compressed image data (slice data), or a parameter set including a picture parameter set (PPS), a sequence parameter set (SPS), or a video parameter set (VPS), or a supplemental enhancement information (SEI) message additionally required in an image decoding process may be generated, in the VCL.

In the NAL, header information (NAL unit data) is added to a raw byte sequence payload (RSRP) generated in the VCL to generate the NAL unit. In here, the RBSP refers to the slice data, the parameter set, the SEI message, etc., generated in the VCL. The NAL unit header may include NAL unit type information specified according to RSRP data included in the corresponding NAL unit.

As illustrated in the figure above, the NAL unit may be classified into a VCL NAL unit and a non-VCL NAL unit according to the RSRP generated in the VCL. The VCL NAL unit may mean a NAL unit including information (slice data) on the information, and the non-VCL NAL unit may mean a NAL unit including information (parameter set or SEI message) required to decode the image.

The VCL NA unit and the non-VCL NAL unit may be transmitted through a network while header information is added according to a data standard of a sub system. For example, the NAL unit may be converted into a data format of a predetermined standard such as an H.266/VVC file format, a real-time transport protocol (RTP), a transport stream (TS), etc., and transported through various networks.

Further, as described above, in respect to the NAL unit, a NAL unit type may be specified according to an RBSP data structure included in the corresponding NAL unit, and information on the NAL unit type may be stored in a NAL unit header and signaled.

For example, the NAL unit may be classified into a VCL NAL unit type and a non-VCL NAL unit type according to whether the NAL unit includes information (slice data) on the image. Further, the VCL NAL unit type may be classified according to a property and a type of picture included in the VCL NAL unit and the non-VCL NAL unit may be classified according to the type of parameter set.

The following is an example of the NAL unit type specified according to the type of parameter set included in the non-VCL NAL unit type.

- Adaptation Parameter Set (APS) NAL unit: Type for the NAL unit including the APS
- Video Parameter Set (VPS) NAL unit: Type for the NAL unit including the VPS
- Sequence Parameter Set (SPS) NAL unit: Type for the NAL unit including the SPS
- Picture Parameter Set (PPS) NAL unit: Type for the NAL unit including the PPS
- Decoding Capability Information (DCI) NAL unit: Type for the NAL unit including the DCI
- Picture header (PH) NAL unit: Type for the NAL unit including the PH

The above-described NAL unit types have syntax information for the NAL unit type, and the syntax information may be stored in a NAL unit header and signaled. For example, the syntax information may be nal_unit_type, and NAL unit types may be specified with a nal_unit_type value.

Meanwhile, as described above, one picture may include a plurality of slices, and one slice may include a slice header and slice data. In this case, one picture header may be further added to a plurality of slices (slice header and slice data set) in one picture. The picture header (picture header syntax) may include information/parameters commonly applicable to the picture. In this document, slices may be mixed or replaced with tile groups. Also, in this document, the slice header may be mixed or replaced with type group headers.

The slice header (slice header syntax, slice header information) may include information/parameters commonly applicable to the slice. The APS (APS Syntax) or PPS (PPS Syntax) may include information/parameters commonly applicable to one or more slices or pictures. The SPS (SPS Syntax) may include information/parameters commonly applicable to one or more sequences. The VPS (VPS syntax) may include information/parameters commonly applicable to multiple layers. The DCI (DCI syntax) may include information/parameters commonly applicable to overall video. The DCI may include information/parameters related to decoding capability. In this document, high level syntax (HLS) may include at least one of the APS syntax, PPS syntax, SPS syntax, VPS syntax, DCI syntax, picture header syntax, or slice header syntax.

In this document, image/video information encoded from an encoding apparatus to a decoding apparatus and signaled in the form of a bitstream includes not only intra-picture partitioning related information, intra/inter prediction information, residual information, in-loop filtering information, and the like, but also information included in the slice header, information included in the picture header, information included in the APS, information included in the PPS, information included in an SPS, information included in a VPS, and/or information included in a DCI. Also, the image/video information may further include NAL unit header information.

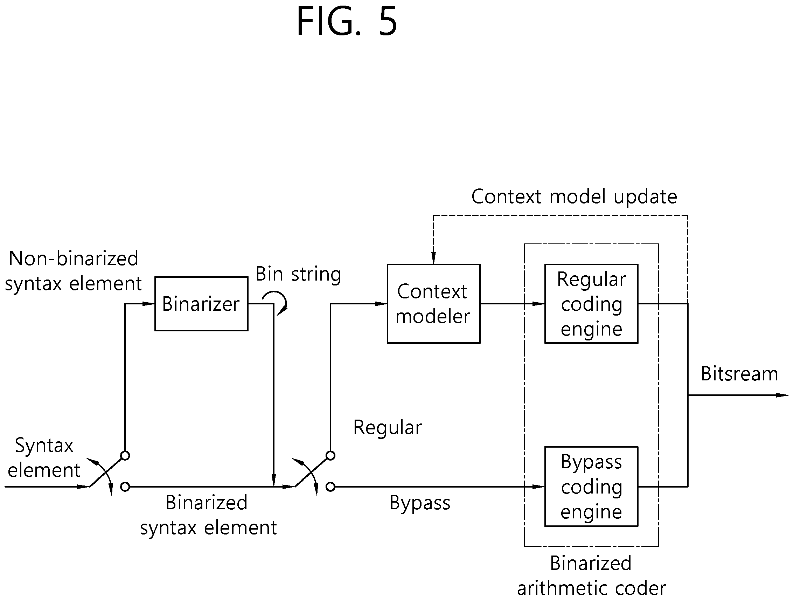

FIG. 5 exemplarily represents context-adaptive binary arithmetic coding (CABAC) for encoding a syntax element. For example, in the encoding process of CABAC, when the input signal is a syntax element rather than a binary value, the value of the input signal can be converted into a binary value through binarization. Additionally, if the input signal is already a binary value (i.e., if the value of the input signal is a binary value), binarization may not be performed and can be bypassed. Here, each binary digit 0 or 1 that constitutes a binary value can be referred to as a bin. For example, if the binarized binary string is 110, each of the 1, 1, and 0 is called a bin. The bins of a syntax element can represent the value of the corresponding syntax element.

Subsequently, the binarized bins of the syntax element can be input into a regular coding engine or a bypass coding engine. The regular coding engine can assign a context model that reflects the probability value for the corresponding bin and encode the bin based on the assigned context model. In the regular coding engine, after encoding each bin, the probability model for the corresponding bin can be updated. The bins encoded as described above can be referred to as context coded bins.

Meanwhile, if the binarized bins of the syntax element are input into the bypass coding engine, they can be encoded as follows. For example, the bypass coding engine omits the procedure of estimating probabilities for the input bins and the procedure of updating the probability model applied to those bins after encoding. For instance, instead of assigning a context model, it applies a uniform probability distribution to encode the input bins, thereby improving the encoding speed. The bins encoded as described above can be referred to as bypass bins.

Entropy coding can determine whether to perform encoding through the regular coding engine or the bypass coding engine and can also switch the encoding path. Additionally, entropy decoding performs the same process as the aforementioned entropy encoding but in reverse order.

For example, when a syntax element is decoded based on a context model, the decoding device can receive the bin corresponding to the syntax element through the bitstream, and determine the context model using the decoding information of the syntax element, the block to be decoded, or neighboring blocks, or the information of symbols/bins decoded in previous stages. According to the determined context model, the occurrence probability of the received bin can be predicted, and arithmetic decoding of the bin can be performed to derive the value of the syntax element. Subsequently, the context model for the next bin to be decoded can be updated using the determined context model.

Additionally, for example, when a syntax element is bypass decoded, the decoding device can receive the bin corresponding to the syntax element through the bitstream and decode the input bin by applying a uniform probability distribution. In this case, the procedure for deriving the context model of the syntax element and the procedure for updating the context model applied to the bin after decoding can be omitted.

As described above, residual samples can be derived as quantized transform coefficients through transformation and quantization processes. The quantized transform coefficients can also be referred to as transform coefficients. In this case, the transform coefficients within the block can be signaled in the form of residual information. The residual information may include residual coding syntax. That is, the encoding device can construct residual coding syntax as residual information, encode it, and output it in the form of a bitstream. The decoding device can decode the residual coding syntax from the bitstream to derive the residual (quantized) transform coefficients. The residual coding syntax can include syntax elements representing whether the transformation has been applied to the block, where the position of the last significant transform coefficient within the block is, whether there are significant transform coefficients within sub-blocks, and the magnitude/sign of the significant transform coefficients, as described later.

For example, the (quantized) transform coefficient (i.e., the residual information) can be encoded and/or decoded based on syntax elements such as last_sig_coeff_x_prefix, last_sig_coef_y_prefix, last_sig_coeff_x_suffix, last_sig_coeff_y_suffix, sb_coded_flag, sig_coeff_flag, abs_level_gt1_flag, par_level_flag, abs_level_gt3flag, abs_remainder, coeff_sign_flag, and dec_abs_level. This can be referred to as residual (data) coding or (transform) coefficient coding. The syntax elements related to residual data encoding/decoding can be represented as shown in the following table.

【Table 1】

| residual_coding( x0, y0, log2TbWidth, log2TbHeight, cIdx ) { | Descriptor |
|---|---|
| if( sps_mts_enabled_flag && cu_sbt_flag && cIdx == 0 && log2TbWidth == 5 && log2TbHeight < 6 ) | |
| log2ZoTbWidth = 4 | |
| else | |
| log2ZoTbWidth = Min( log2TbWidth, 5 ) | |
| if( sps_mts_enabled_flag && cu_sbt_flag && cIdx == 0 && log2TbWidth < 6 && log2TbHeight == 5 ) | |
| log2ZoTbHeight = 4 | |
| else | |
| log2ZoTbHeight = Min( log2TbHeight, 5 ) | |
| if( log2TbWidth > 0 ) | |
| **last_sig_coeff_x_prefix** | ae(v) |
| if( log2TbHeight > 0 ) | |

| | |
|---|---|
| **last_sig_coeff_y_prefix** | ae(v) |
| if( last_sig_coeff_x_prefix > 3 ) | |
| **last_sig_coeff_x_suffix** | ae(v) |
| if( last_sig_coeff_y_prefix > 3 ) | |
| **last_sig_coeff_y_suffix** | ae(v) |
| log2TbWidth = log2ZoTbWidth | |
| log2TbHeight = log2ZoTbHeight | |
| remBinsPass1 = ( ( 1 << ( log2TbWidth + log2TbHeight ) ) * 7 ) >> 2 | |
| log2SbW = ( Min( log2TbWidth, log2TbHeight ) < 2 ? 1 : 2 ) | |
| log2SbH = log2SbW | |
| if( log2TbWidth + log2TbHeight > 3 ) | |
| if( log2TbWidth < 2 ) { | |
| log2SbW = log2TbWidth | |
| log2SbH = 4 − log2SbW | |
| } else if( log2TbHeight < 2 ) { | |
| log2SbH = log2TbHeight | |
| log2SbW = 4 − log2SbH | |
| } | |
| numSbCoeff = 1 << ( log2SbW + log2SbH ) | |
| lastScanPos = numSbCoeff | |
| lastSubBlock = ( 1 << ( log2TbWidth + log2TbHeight − ( log2SbW + log2SbH ) ) ) − 1 | |
| do { | |
| if( lastScanPos == 0 ) { | |
| lastScanPos = numSbCoeff | |
| lastSubBlock− − | |
| } | |
| | |
| lastScanPos− − | |
| xS = DiagScanOrder[ log2TbWidth − log2SbW ][ log2TbHeight − log2SbH ][ lastSubBlock ][ 0 ] | |
| yS = DiagScanOrder[ log2TbWidth − log2SbW ][ log2TbHeight − log2SbH ][ lastSubBlock ][ 1 ] | |
| xC = ( xS << log2SbW ) + DiagScanOrder[ log2SbW ][ log2SbH ][ lastScanPos ][ 0 ] | |
| yC = ( yS << log2SbH ) + DiagScanOrder[ log2SbW ][ log2SbH ][ lastScanPos ][ 1 ] | |
| } while( ( xC != LastSignificantCoeffX ) \|\| ( yC != LastSignificantCoeffY ) ) | |
| if( lastSubBlock == 0 && log2TbWidth >= 2 && log2TbHeight >= 2 && !transform_skip_flag[ x0 ][ y0 ][ cIdx ] && lastScanPos > 0 ) | |
| LfnstDcOnly = 0 | |
| if( ( lastSubBlock > 0 && log2TbWidth >= 2 && log2TbHeight >= 2 ) \|\| ( lastScanPos > 7 && ( log2TbWidth == 2 \|\| log2TbWidth == 3 ) && log2TbWidth == log2TbHeight ) ) | |
| LfnstZeroOutSigCoeffFlag = 0 | |
| if( ( lastSubBlock > 0 \|\| lastScanPos > 0 ) && cIdx == 0 ) | |
| MtsDcOnly = 0 | |
| QState = 0 | |
| for( i = lastSubBlock; i >= 0; i− − ) { | |
| startQStateSb = QState | |
| xS = DiagScanOrder[ log2TbWidth − log2SbW ][ log2TbHeight − log2SbH ][ i ][ 0 ] | |
| yS = DiagScanOrder[ log2TbWidth − log2SbW ][ log2TbHeight − log2SbH ][ i ][ 1 ] | |
| inferSbDcSigCoeffFlag = 0 | |
| if( i < lastSubBlock && i > 0 ) { | |
| **sb_coded_flag[ xS ][ yS ]** | ae(v) |

| | |
|---|---|
| inferSbDcSigCoeffFlag = 1 | |
| } | |
| if( sb_coded_flag[ xS ][ yS ]  &&  ( xS > 3  \|\|  yS > 3 )  &&  cIdx  ==  0 ) | |
| MtsZeroOutSigCoeffFlag = 0 | |
| firstSigScanPosSb = numSbCoeff | |
| lastSigScanPosSb = −1 | |
| firstPosMode0 = ( i  ==  lastSubBlock ? lastScanPos : numSbCoeff − 1 ) | |
| firstPosMode1 = firstPosMode0 | |
| for( n = firstPosMode0; n  >=  0  &&  remBinsPass1  >=  4; n−− ) { | |
| xC = ( xS  <<  log2SbW ) + DiagScanOrder[ log2SbW ][ log2SbH ][ n ][ 0 ] | |
| yC = ( yS  <<  log2SbH ) + DiagScanOrder[ log2SbW ][ log2SbH ][ n ][ 1 ] | |
| if( sb_coded_flag[ xS ][ yS ]  &&  ( n > 0  \|\|  !inferSbDcSigCoeffFlag )  &&<br>( xC  !=  LastSignificantCoeffX  \|\|  yC  !=  LastSignificantCoeffY ) ) { | |
| **sig_coeff_flag**[ xC ][ yC ] | ae(v) |
| remBinsPass1−− | |
| if( sig_coeff_flag[ xC ][ yC ] ) | |
| inferSbDcSigCoeffFlag = 0 | |
| } | |
| if( sig_coeff_flag[ xC ][ yC ] ) { | |
| **abs_level_gtx_flag**[ n ][ 0 ] | ae(v) |
| remBinsPass1−− | |
| if( abs_level_gtx_flag[ n ][ 0 ] ) { | |
| **par_level_flag**[ n ] | ae(v) |
| remBinsPass1−− | |
| **abs_level_gtx_flag**[ n ][ 1 ] | ae(v) |
| remBinsPass1−− | |
| } | |

| | |
|---|---|
| if( lastSigScanPosSb  ==  −1 ) | |
| lastSigScanPosSb = n | |
| firstSigScanPosSb = n | |
| } | |
| AbsLevelPass1[ xC ][ yC ] = sig_coeff_flag[ xC ][ yC ] + par_level_flag[ n ] +<br>abs_level_gtx_flag[ n ][ 0 ] + 2 * abs_level_gtx_flag[ n ][ 1 ] | |
| if( sh_dep_quant_used_flag ) | |
| QState = QStateTransTable[ QState ][ AbsLevelPass1[ xC ][ yC ] & 1 ] | |
| firstPosMode1 = n − 1 | |
| } | |
| for( n = firstPosMode0; n > firstPosMode1; n−− ) { | |
| xC = ( xS  <<  log2SbW ) + DiagScanOrder[ log2SbW ][ log2SbH ][ n ][ 0 ] | |
| yC = ( yS  <<  log2SbH ) + DiagScanOrder[ log2SbW ][ log2SbH ][ n ][ 1 ] | |
| if( abs_level_gtx_flag[ n ][ 1 ] ) | |
| **abs_remainder**[ n ] | ae(v) |
| AbsLevel[ xC ][ yC ] = AbsLevelPass1[ xC ][ yC ] + 2 * abs_remainder[ n ] | |
| } | |
| for( n = firstPosMode1; n  >=  0; n−− ) { | |
| xC = ( xS  <<  log2SbW ) + DiagScanOrder[ log2SbW ][ log2SbH ][ n ][ 0 ] | |
| yC = ( yS  <<  log2SbH ) + DiagScanOrder[ log2SbW ][ log2SbH ][ n ][ 1 ] | |
| if( sb_coded_flag[ xS ][ yS ] ) | |
| **dec_abs_level**[ n ] | ae(v) |
| if( AbsLevel[ xC ][ yC ] > 0 ) { | |
| if( lastSigScanPosSb  ==  −1 ) | |
| lastSigScanPosSb = n | |

| | |
|---|---|
| firstSigScanPosSb = n | |
| } | |
| if( sh_dep_quant_used_flag ) | |
| QState = QStateTransTable[ QState ][ AbsLevel[ xC ][ yC ] & 1 ] | |
| } | |
| signHiddenFlag = sh_sign_data_hiding_used_flag  &&<br>  ( lastSigScanPosSb − firstSigScanPosSb > 3 ? 1 : 0 ) | |
| for( n = numSbCoeff − 1; n  >=  0; n− − ) { | |
| xC = ( xS  <<  log2SbW ) + DiagScanOrder[ log2SbW ][ log2SbH ][ n ][ 0 ] | |
| yC = ( yS  <<  log2SbH ) + DiagScanOrder[ log2SbW ][ log2SbH ][ n ][ 1 ] | |
| if( ( AbsLevel[ xC ][ yC ] > 0 )  &&<br>  ( !signHiddenFlag  ||  ( n  !=  firstSigScanPosSb ) ) ) | |
| **coeff_sign_flag[ n ]** | **ae(v)** |
| } | |

| | |
|---|---|
| if( sh_dep_quant_used_flag ) { | |
| QState = startQStateSb | |
| for( n = numSbCoeff − 1; n  >=  0; n− − ) { | |
| xC = ( xS  <<  log2SbW ) + DiagScanOrder[ log2SbW ][ log2SbH ][ n ][ 0 ] | |
| yC = ( yS  <<  log2SbH ) + DiagScanOrder[ log2SbW ][ log2SbH ][ n ][ 1 ] | |
| if( AbsLevel[ xC ][ yC ] > 0 ) | |
| TransCoeffLevel[ x0 ][ y0 ][ cIdx ][ xC ][ yC ] =<br>  ( 2 * AbsLevel[ xC ][ yC ] − ( QState > 1 ? 1 : 0 ) ) *<br>  ( 1 − 2 * coeff_sign_flag[ n ] ) | |
| QState = QStateTransTable[ QState ][ AbsLevel[ xC ][ yC ] & 1 ] | |
| } | |
| } else { | |
| sumAbsLevel = 0 | |
| for( n = numSbCoeff − 1; n  >=  0; n− − ) { | |
| xC = ( xS  <<  log2SbW ) + DiagScanOrder[ log2SbW ][ log2SbH ][ n ][ 0 ] | |
| yC = ( yS  <<  log2SbH ) + DiagScanOrder[ log2SbW ][ log2SbH ][ n ][ 1 ] | |
| if( AbsLevel[ xC ][ yC ] > 0 ) { | |
| TransCoeffLevel[ x0 ][ y0 ][ cIdx ][ xC ][ yC ]  =<br>  AbsLevel[ xC ][ yC ] * ( 1 − 2 * coeff_sign_flag[ n ] ) | |
| if( signHiddenFlag ) { | |
| sumAbsLevel  +=  AbsLevel[ xC ][ yC ] | |
| if( n  ==  firstSigScanPosSb  &&  sumAbsLevel % 2  ==  1 ) | |
| TransCoeffLevel[ x0 ][ y0 ][ cIdx ][ xC ][ yC ]  =<br>  −TransCoeffLevel[ x0 ][ y0 ][ cIdx ][ xC ][ yC ] | |
| } | |
| } | |
| } | |
| } | |
| } | |
| } | |

For example, last_sig_coeff_x_prefix, last_sig_coeff_y_prefix, last_sig_coeff_x_suffix, and last_sig_coeff_y_suffix are syntax elements used to code the (x, y) position information of the last non-zero coefficient within the associated block. The associated block can be a coding block (CB) or a transform block (TB). In the context of transformation (and quantization) and residual coding procedures, CB and TB can be used interchangeably. For example, residual samples can be derived for a CB, and (quantized) transform coefficients can be derived through the transformation and quantization for the residual samples. Through the residual coding procedure, information (or syntax elements) that efficiently represents the (quantized) transform coefficients (such as their position, magnitude, sign, etc.) can be generated and signaled. The quantized transform coefficients can also be referred to as transform coefficients. Generally, when the CB is not larger than the maximum TB, the size of the CB can be the same as that of the TB. In this case, the block subject to transformation (and quantization) and residual coding can be referred to as a CB or a TB. Meanwhile, when the CB is larger than the maximum TB, the block subject to transformation (and quantization) and residual coding can be referred to as a TB. Hereinafter, syntax elements related to residual coding are described as being signaled on a transform block (TB) basis; however, as mentioned above, this is an example, and the TB can be used interchangeably with the coding block (CB).

Specifically, last_sig_coeff_x_prefix represents the prefix of the column position of the last significant coefficient within the transform block in the scanning order, and last_sig_coef_y_prefix represents the prefix of the row position of the last significant coefficient within the transform block in the scanning order. Last_sig_coeff_x_suffix represents the suffix of the column position of the last significant coefficient within the transform block in the scanning order, and last_sig_coeff_y_suffix represents the suffix of the row position of the last significant coefficient within the transform block in the scanning order. Here, the significant coefficient can refer to a non-zero coefficient. Additionally, the scanning order may be an upward diagonal scanning order. Alternatively, the scanning order could be a horizontal scanning order or a vertical scanning order. The scanning order can be determined based on whether intra/inter prediction is applied to the target block (CB including CB or TB) and/or the specific intra/inter prediction mode.

Next, after dividing the transform block into 4x4 sub-blocks, a 1-bit syntax element, sb_coded_flag, can be used for each 4x4 sub-block to represent whether a non-zero coefficient exists within the current sub-block. The sub-block can be used interchangeably with the coefficient group (CG).

For example, if the value of sb_coded_flag is 0, there is no further information to transmit, so the encoding device can terminate the coding process for the current sub-block. Conversely, if the value of sb_coded_flag is 1, the encoding device continues the coding process for the sig_coeff_flag. The sub-block containing the last non-zero coefficient does not require coding for sb_coded_flag, and since the sub-block containing the DC information of the transform block is more likely to include non-zero coefficients, sb_coded_flag is not coded, and it can be assumed that its value is 1.

If the value of sb_codedflag is 1, representing that a non-zero coefficient exists in the current sub-block, the coding device can code the sig_coeff_flag, which has a binary value, in reverse scanning order. The coding device can code the 1-bit syntax element sig_coeff_flag[n] for each coefficient at the scanning position (n) according to the scanning order. If the coefficient at the current scanning position is not zero, the value of sig_coeff_flag[n] is set to 1. Here, for the sub-block containing the last non-zero coefficient, there is no need to code sig_coeff_flag[n] for the last non-zero coefficient, so the coding process can be omitted. Level information coding is performed only when the value of sig_coeff_flag[n] is 1, and the level information coding process can use four syntax elements. Specifically, each sig_coeff_flag[xC][yC] can represent whether the level (value) of the transform coefficient at each transform coefficient position (xC, yC) within the current TB is non-zero.

The remaining level value after coding sig_coeff_flag[n] can be derived as shown in the equation below. That is, the level value remAbsLevel[n] to be coded at the scanning position (n) can be derived as shown in the following equation.

【Equation 1】

$$remAbsLevel[n] \ = \ | \, coeff[n] \, | \ - \ 1$$

Here, coeff[n] represents the actual transform coefficient value.

Additionally, abs_level_gtx_flag[n][0] can represent whether remAbsLevel[n] at the scanning position (n) is greater than 1. For example, if the value of abs_level_gtx_flag[n][0] is 0, the absolute value of the coefficient at that position can be 1. Additionally, if the value of abs_level_gtxflag[n][0] is 1, the remAbsLevel[n] representing the level value to be coded later can be derived as in the equation below.

【Equation 2】

$$remAbsLevel[n] \ = \ remAbsLevel[n] \ - \ 1$$

Additionally, the least significant coefficient (LSB) value of remAbsLevel[n] described in equation 2 above can be coded through par_level_flag[n].

【Equation 3】

$$par\_level\_flag[n] \ = \ remAbsLevel[n] \ \& \ 1$$

Here, par_level_flag[n] can represent the parity of the transform coefficient level (value) at scanning position n. After coding par_leve_flag[n], the level value remAbsLevel[n] to be coded can be updated as in the equation below.

【Equation 4】

$$remAbsLevel[n] \ = \ remAbsLevel[n] \ >> \ 1$$

Additionally, abs level_gtx_flag[n][1] can represent whether remAbsLevel[n] at the corresponding scanning position (n) is greater than 3. For example, coding for abs_remainder[n] can be performed only when the value of abs_level_gtx_flag[n][1] is 1. The relationship between coeff, which is the actual transform coefficient value, and each syntax element can be as shown in the equation below.

【Equation 5】

$$|coeff[n]| = sig\_coeff\_flag[n] + abs\_level\_gtx\_flag[n][0] + par\_level\_flag[n] + 2 * (abs\_level\_gtx\_flag[n][1] + abs\_remainder[n])$$

Here, |coeff[n]| represents the transform coefficient level (value), and may also be expressed as AbsLevel[n] for the transform coefficient.

Additionally, the table below shows examples related to equation 5 described above.

【Table 2】

| |coeff[n]| | sig_coeff_flag[n] | abs_level_gtx_flag[n][0] | par_level_flag[n] | abs_level_gtx_flag[n][1] | abs_remainder[n] |
|---|---|---|---|---|---|
| 0 | 0 | | | | |
| 1 | 1 | 0 | | | |
| 2 | 1 | 1 | 0 | 0 | |
| 3 | 1 | 1 | 1 | 0 | |
| 4 | 1 | 1 | 0 | 1 | 0 |
| 5 | 1 | 1 | 1 | 1 | 0 |
| 6 | 1 | 1 | 0 | 1 | 1 |
| 7 | 1 | 1 | 1 | 1 | 1 |
| 8 | 1 | 1 | 0 | 1 | 2 |
| 9 | 1 | 1 | 1 | 1 | 2 |
| 10 | 1 | 1 | 0 | 1 | 3 |
| 11 | 1 | 1 | 1 | 1 | 3 |
| … | … | … | … | | |

Finally, the sign of each coefficient can be coded using the 1-bit symbol coeff_sign_flag[n]. At this time, coeff_sign_flag[n] can represent the sign of the transform coefficient level at the corresponding scanning position (n).

Meanwhile, a method to improve the throughput performance of CABAC by limiting the number of context coded bins may be proposed. The throughput of CABAC can decrease due to its regular coding engine, which shows high data dependency because regular coding uses probability states and ranges updated through the coding of previous bins. This can result in significant time consumption for reading probability intervals and determining the current state. Therefore, by limiting the number of context coded bins, the throughput performance of CABAC can be enhanced.

Therefore, the total number of bins used to represent sig_coeff_flag[n], abs_level_gtx_flag[n][0], par_level_flag[n], and abs_level_gtx_flag[n][1] in Table 1 can be limited to 1.75 per pixel within a transform block, depending on the size of the transform block. For example, if all the limited context coded bins are used to code the context elements, bypass coding can be performed on the remaining coefficients by binarizing the coefficients without using CABAC. In other words, when the number of coded context coded bins in a TB reaches TB width * TB height * 1.75, no further sig_coeff_flag[n], abs_level_gtx_flag[n][0], par_level_flag[n], or abs_level_gtx_flag[n][1], which are coded as context coded bins, will be coded, and the |coeff[n]| value can be coded directly as dec_abs_level[n]. For example, the relationship between the dec_abs_level[n] value and the |coeff[n]| value may be as shown in the equation below.

【Equation 6】

$$| \text{coeff}[n] | = \text{dec\_abs\_level}[n]$$

In this case, the sign of each coefficient can also be coded using the 1-bit symbol coeff_sign_flag[n].

Additionally, the table below shows examples related to equation 6 described above.

【Table 3】

| \|coeff[n]\| | dec_abs_level[n] |
|---|---|
| 0 | 0 |
| 1 | 1 |
| 2 | 2 |
| 3 | 3 |
| 4 | 4 |
| 5 | 5 |
| 6 | 6 |
| 7 | 7 |
| 8 | 8 |
| 9 | 9 |
| 10 | 10 |
| 11 | 11 |
| … | … |

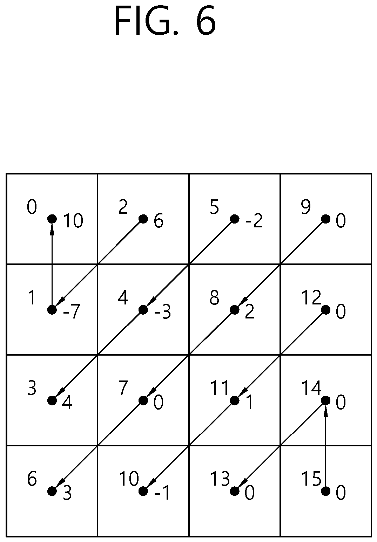

FIG. 6 is a diagram illustrating an example of transform coefficients within a 4x4 block.

FIG. 6's 4x4 block represents an example of quantized coefficients. The block shown in FIG. 6 can be a 4x4 transform block, or it can be a 4x4 sub-block of an 8x8, 16x16, or 32x32 transform block. Additionally, the 4x4 block in FIG. 6 can represent a luma block or a chroma block.

As an example, the coding results for the coefficients scanned along the reverse diagonal of FIG. 6 can be as shown in the table below.

【Table 4】

| n | 15 | 14 | 13 | 12 | 11 | 10 | 9 | 8 | 7 | 6 | 5 | 4 | 3 | 2 | 1 | 0 |
|---|---|---|---|---|---|---|---|---|---|---|---|---|---|---|---|---|
| coefficients | 0 | 0 | 0 | 0 | 1 | -1 | 0 | 2 | 0 | 3 | -2 | -3 | 4 | 6 | -7 | 10 |
| sig_coeff_flag[n] | 0 | 0 | 0 | 0 | 1 | 1 | 0 | 1 | 0 | 1 | 1 | 1 | 1 | 1 | | |
| abs_level_gtX_flag[n][0] | | | | | 0 | 0 | | 1 | | 1 | 1 | 1 | 1 | 1 | | |
| par_level_flag[n] | | | | | | | | 0 | | 1 | 0 | 1 | 0 | 0 | | |
| abs_level_gtX_flag[n][1] | | | | | | | | 0 | | 0 | 0 | 0 | 1 | 1 | | |
| abs_remainder[n] | | | | | | | | | | | | | 0 | 1 | | |
| dec_abs_level[n] | | | | | | | | | | | | | | | 7 | 10 |
| coeff_sign_flag[n] | 0 | 0 | 0 | 0 | 0 | 1 | 0 | 0 | 0 | 0 | 1 | 1 | 0 | 0 | 1 | 0 |

In the above Table 4, n represents the scan position of the coefficient according to the reverse diagonal scan. For example, when n is 15, it indicates the coefficient that is scanned first in the 4x4 block, i.e., the bottom-right corner coefficient, and when n is 0, it indicates the coefficient that is scanned last, i.e., the top-left corner coefficient.

Meanwhile, to improve coding efficiency or depending on the application, the transformation process can be omitted. In this case, the syntax elements related to residual data encoding/decoding can be represented as shown in the following table.

【Table 5】

| residual_ts_coding( x0, y0, log2TbWidth, log2TbHeight, cIdx ) { | Descriptor |
|---|---|
|   log2SbW = ( Min( log2TbWidth, log2TbHeight ) < 2 ? 1 : 2 ) | |
|   log2SbH = log2SbW | |
|   if( log2TbWidth + log2TbHeight > 3 ) | |
|     if( log2TbWidth < 2 ) { | |
|       log2SbW = log2TbWidth | |
|       log2SbH = 4 − log2SbW | |
|     } else if( log2TbHeight < 2 ) { | |
|       log2SbH = log2TbHeight | |
|       log2SbW = 4 − log2SbH | |
|     } | |
|   numSbCoeff = 1 << ( log2SbW + log2SbH ) | |
|   lastSubBlock = ( 1 << ( log2TbWidth + log2TbHeight − ( log2SbW + log2SbH ) ) ) − 1 | |
|   inferSbCbf = 1 | |
|   RemCcbs = ( ( 1 << ( log2TbWidth + log2TbHeight ) ) * 7 ) >> 2 | |
|   for( i =0; i <= lastSubBlock; i++ ) { | |
|     xS = DiagScanOrder[ log2TbWidth − log2SbW ][ log2TbHeight − log2SbH ][ i ][ 0 ] | |
|     yS = DiagScanOrder[ log2TbWidth − log2SbW ][ log2TbHeight − log2SbH ][ i ][ 1 ] | |
|     if( i != lastSubBlock \|\| !inferSbCbf) | |
|       **sb_coded_flag**[ xS ][ yS ] | ae(v) |
|     if( sb_coded_flag[ xS ][ yS ] && i < lastSubBlock ) | |
|       inferSbCbf = 0 | |
|   /* First scan pass */ | |

|   inferSbSigCoeffFlag = 1 | |
|---|---|
|   lastScanPosPass1 = −1 | |
|   for( n = 0; n <= numSbCoeff − 1 && RemCcbs >= 4; n++ ) { | |
|     xC = ( xS << log2SbW ) + DiagScanOrder[ log2SbW ][ log2SbH ][ n ][ 0 ] | |
|     yC = ( yS << log2SbH ) + DiagScanOrder[ log2SbW ][ log2SbH ][ n ][ 1 ] | |
|     lastScanPosPass1 = n | |
|     if( sb_coded_flag[ xS ][ yS ] && <br>       ( n != numSbCoeff − 1 \|\| !inferSbSigCoeffFlag ) ) { | |
|       **sig_coeff_flag**[ xC ][ yC ] | ae(v) |
|       RemCcbs− − | |
|       if( sig_coeff_flag[ xC ][ yC ] ) | |
|         inferSbSigCoeffFlag = 0 | |
|     } | |
|     CoeffSignLevel[ xC ][ yC ] = 0 | |
|     if( sig_coeff_flag[ xC ][ yC ] ) { | |
|       **coeff_sign_flag**[ n ] | ae(v) |
|       RemCcbs− − | |
|       CoeffSignLevel[ xC ][ yC ] = ( coeff_sign_flag[ n ] > 0 ? −1 : 1 ) | |
|       **abs_level_gtx_flag**[ n ][ 0 ] | ae(v) |
|       RemCcbs− − | |
|       if( abs_level_gtx_flag[ n ][ 0 ] ) { | |
|         **par_level_flag**[ n ] | ae(v) |
|         RemCcbs− − | |

| | |
|---|---|
| `                }` | |
| `            }` | |
| `            AbsLevelPass1[ xC ][ yC ] =` | |
| `                sig_coeff_flag[ xC ][ yC ] + par_level_flag[ n ] + abs_level_gtx_flag[ n ][ 0 ]` | |
| `        }` | |
| `        /* Greater than X scan pass (numGtXFlags=5) */` | |
| `        lastScanPosPass2 = −1` | |
| `        for( n = 0; n  <=  numSbCoeff − 1  &&  RemCcbs  >=  4; n++ ) {` | |
| `            xC = ( xS  <<  log2SbW ) + DiagScanOrder[ log2SbW ][ log2SbH ][ n ][ 0 ]` | |
| `            yC = ( yS  <<  log2SbH ) + DiagScanOrder[ log2SbW ][ log2SbH ][ n ][ 1 ]` | |
| `            AbsLevelPass2[ xC ][ yC ] = AbsLevelPass1[ xC ][ yC ]` | |
| `            for( j = 1; j < 5; j++ ) {` | |
| `                if( abs_level_gtx_flag[ n ][ j − 1 ] ) {` | |
| `                    abs_level_gtx_flag[ n ][ j ]` | ae(v) |
| `                    RemCcbs− −` | |
| `                }` | |
| `                AbsLevelPass2[ xC ][ yC ]  +=  2 * abs_level_gtx_flag[ n ][ j ]` | |
| `            }` | |
| `            lastScanPosPass2 = n` | |
| `        }` | |
| `        /* remainder scan pass */` | |
| `        for( n = 0; n  <=  numSbCoeff − 1; n++ ) {` | |
| `            xC = ( xS  <<  log2SbW ) + DiagScanOrder[ log2SbW ][ log2SbH ][ n ][ 0 ]` | |
| `            yC = ( yS  <<  log2SbH ) + DiagScanOrder[ log2SbW ][ log2SbH ][ n ][ 1 ]` | |
| `            if( ( n  <=  lastScanPosPass2  &&  AbsLevelPass2[ xC ][ yC ]  >=  10 )  \|\|` <br>`                ( n > lastScanPosPass2  &&  n  <=  lastScanPosPass1  &&` <br>`                AbsLevelPass1[ xC ][ yC ]  >=  2 )  \|\|` <br>`                ( n > lastScanPosPass1  &&  sb_coded_flag[ xS ][ yS ] ) )` | |
| `                abs_remainder[ n ]` | ae(v) |

| | |
|---|---|
| `            if( n  <=  lastScanPosPass2 )` | |
| `                AbsLevel[ xC ][ yC ] = AbsLevelPass2[ xC ][ yC ] + 2 * abs_remainder[ n ]` | |
| `            else if( n  <=  lastScanPosPass1 )` | |
| `                AbsLevel[ xC ][ yC ] = AbsLevelPass1[ xC ][ yC ] + 2 * abs_remainder[ n ]` | |
| `            else { /* bypass */` | |
| `                AbsLevel[ xC ][ yC ] = abs_remainder[ n ]` | |
| `                if( abs_remainder[ n ] )` | |
| `                    coeff_sign_flag[ n ]` | ae(v) |
| `            }` | |
| `            if( BdpcmFlag[ x0 ][ y0 ][ cIdx ]  ==  0  &&  n  <=  lastScanPosPass1 ) {` | |
| `                absLeftCoeff = xC > 0 ? AbsLevel[ xC − 1 ][ yC ] : 0` | |
| `                absAboveCoeff  = yC > 0 ? AbsLevel[ xC ][ yC − 1 ] : 0` | |
| `                predCoeff = Max( absLeftCoeff, absAboveCoeff )` | |
| `                if( AbsLevel[ xC ][ yC ]  ==  1  &&  predCoeff > 0 )` | |
| `                    AbsLevel[ xC ][ yC ] = predCoeff` | |
| `                else if( AbsLevel[ xC ][ yC ] > 0  &&  AbsLevel[ xC ][ yC ]  <=  predCoeff )` | |
| `                    AbsLevel[ xC ][ yC ]− −` | |
| `            }` | |
| `            TransCoeffLevel[ x0 ][ y0 ][ cIdx ][ xC ][ yC ] = ( 1 − 2 * coeff_sign_flag[ n ] ) *` <br>`                AbsLevel[ xC ][ yC ]` | |
| `        }` | |
| `    }` | |
| `}` | |

For example, transform coefficient can be coded using the sb_coded_flag, sig_coeff_flag, coeff_sign_flag (context/bypass coded), abs_level_gtx_flag[n][0], par_level_flag, abs_level_gtx_flag[n][1], abs_level_gtx_flag[n][2], abs_level_gtx_flag[n][3], abs level_gtx_flag[n][4], and abs_remainder syntax elements.

For example, after dividing a block where the transformation is omitted into 4x4 sub-blocks, a 1-bit syntax element, sb_coded_flag, can be used for each 4x4 sub-block to represent whether there are non-zero coefficients within the current sub-block. The sub-block can be used interchangeably with CG (coefficient group). For instance, if the value of sb_coded_flag is 0, it indicates that there is no further information to transmit, so the coding process for the current sub-block can be terminated. Conversely, if the value of sb_coded_flag is 1, the coding process for sig_coeff_flag can continue. For the first sub-block scanned within a block where the transformation is omitted (the top-left sub-block within the block) and the last sub-block scanned (the bottom-right sub-block within the block), sb_coded_flag coding is unnecessary, and therefore, it can be assumed that the value is 1.

If the sb_coded_flag represents that there are non-zero coefficients within the current sub-block, the sig_coeff_flag, which has a binary value, can be coded according to the forward scan order. For each coefficient at the scanning position (n) following the scan order, a 1-bit syntax element sig_coeff_flag[n] can be coded. At this time, sig_coeff_flag[xC][yC] can represent whether the level (value) of the corresponding coefficient at the coefficient location (xC, yC) is non-zero. If the value of coefficient at the current scan position is not 0, the value of sig_coeff_flag[n] can be 1.

Additionally, for example, the residual information may include a sign flag representing the sign of the residual coefficient, a first coefficient level flag representing whether the coefficient level is greater than a first threshold, a parity level flag for the parity of the coefficient level for the residual coefficient, and/or a second coefficient level flag representing whether the coefficient level of the residual coefficient is greater than a second threshold, a third coefficient level flag representing whether the coefficient level is greater than a third threshold, a fourth coefficient level flag representing whether the coefficient level of the residual coefficient is greater than a fourth threshold, and a fifth coefficient level flag representing whether the coefficient level of the residual coefficient is greater than a fifth threshold, only when the value of sig_coeff_flag is 1.

Additionally, for example, the residual information may include a syntax element coded based on bypass for the residual coefficient of the current block. The bypass coded syntax element may include coefficient level information on the value of the current residual coefficient. The coefficient level information can be represented as the syntax element abs_remainder. Additionally, the bypass coded syntax element can include the sign flag.

Additionally, to solve the throughput issue of CABAC, an algorithm that limits the number of context-coded bins in residual coding for blocks where the transform is omitted can be used. Here, the sum of the context-coded bins used to represent sig_coeff_flag, coeff_sign_flag, abs_level_gtx flag[n][0], par_level flag, abs_level_gtx_flag[n][1], abs_level_gtx flag[n][2], abs_level_gtx_flag[n][3], abs_level_gtx_flag[n][4] can be limited to 1.75 per pixel within the transform block.

For example, if all the context-coded bins are used to code the syntax elements, the remaining coefficients can be bypass-coded by binarizing the coefficients without using CABAC. In other words, when the number of coded context-coded bins reaches TU TB width * TU TB height * 1.75 in the TUB, sig_coeff_flag, coeff_sign_flag, abs_level_gtx_flag[n][0], par_level flag, abs_level_gtx_flag[n][1], abs_level_gtx flag[n][2], abs_level_gtx_flag[n][3], and abs_level_gtx_flag[n][4] may no longer be coded with context-coded bins, and abs_remainder can be coded immediately. In this case, the sign of the coefficient may be bypass-coded using the 1-bit symbol coeff_sign_flag.

The semantics for the syntax elements related to the residual data encoding/decoding can be represented as shown in the following table.

【Table 6】

The array AbsLevel[ xC ][ yC ] represents an array of absolute values of transform coefficient levels for the current transform block and the array AbsLevelPass1[ xC ][ yC ] represents an array of partially reconstructed absolute values of transform coefficient levels for the current transform block. The array indices xC and yC specify the transform coefficient location ( xC, yC ) within the current transform block. When the value of AbsLevel[ xC ][ yC ] is not specified in Table 1-1, it is inferred to be equal to 0. When the value of AbsLevelPass1[ xC ][ yC ] is not specified in Table 1-1, it is inferred to be equal to 0.
The variables CoeffMin and CoeffMax specifying the minimum and maximum transform coefficient values are derived as follows:

$$CoeffMin = -( 1 \ll 15 ) \tag{7}$$

$$CoeffMax = ( 1 \ll 15 ) - 1 \tag{8}$$

The array QStateTransTable[ ][ ] is specified as follows:

$$QStateTransTable[ ][ ] = \{ \{ 0, 2 \}, \{ 2, 0 \}, \{ 1, 3 \}, \{ 3, 1 \} \} \tag{9}$$

**last_sig_coeff_x_prefix** specifies the prefix of the column position of the last significant coefficient in scanning order within a transform block. The values of last_sig_coeff_x_prefix shall be in the range of 0 to ( log2ZoTbWidth $\ll$ 1 ) $-$ 1, inclusive.
When last_sig_coeff_x_prefix is not present, it is inferred to be 0.
**last_sig_coeff_y_prefix** specifies the prefix of the row position of the last significant coefficient in scanning order within a transform block. The values of last_sig_coeff_y_prefix shall be in the range of 0 to ( log2ZoTbHeight $\ll$ 1 ) $-$ 1, inclusive.
When last_sig_coeff_y_prefix is not present, it is inferred to be 0.
**last_sig_coeff_x_suffix** specifies the suffix of the column position of the last significant coefficient in scanning order within a transform block. The values of last_sig_coeff_x_suffix shall be in the range of 0 to ( 1 $\ll$ ( ( last_sig_coeff_x_prefix $\gg$ 1 ) $-$ 1 ) ) $-$ 1, inclusive.

The column position of the last significant coefficient in scanning order within a transform block LastSignificantCoeffX is derived as follows:

– If last_sig_coeff_x_suffix is not present, the following applies:

$$LastSignificantCoeffX = last\_sig\_coeff\_x\_prefix \tag{10}$$

– Otherwise (last_sig_coeff_x_suffix is present), the following applies:

$$LastSignificantCoeffX = ( 1 \ll ( ( last\_sig\_coeff\_x\_prefix \gg 1 ) - 1 ) ) * \tag{11}$$
$$( 2 + (last\_sig\_coeff\_x\_prefix \& 1 ) ) + last\_sig\_coeff\_x\_suffix$$

**last_sig_coeff_y_suffix** specifies the suffix of the row position of the last significant coefficient in scanning order within a transform block. The values of last_sig_coeff_y_suffix shall be in the range of 0 to ( 1 $\ll$ ( ( last_sig_coeff_y_prefix $\gg$ 1 ) $-$ 1 ) ) $-$ 1, inclusive.
The row position of the last significant coefficient in scanning order within a transform block LastSignificantCoeffY is derived as follows:

– If last_sig_coeff_y_suffix is not present, the following applies:

$$LastSignificantCoeffY = last\_sig\_coeff\_y\_prefix \tag{12}$$

– Otherwise (last_sig_coeff_y_suffix is present), the following applies:

$$LastSignificantCoeffY = ( 1 \ll ( ( last\_sig\_coeff\_y\_prefix \gg 1 ) - 1 ) ) * \tag{13}$$
$$( 2 + ( last\_sig\_coeff\_y\_prefix \& 1 ) ) + last\_sig\_coeff\_y\_suffix$$

**sb_coded_flag[ xS ][ yS ]** specifies the following for the subblock at location ( xS, yS ) within the current transform block, where a subblock is an array of transform coefficient levels:
When sb_coded_flag[ xS ][ yS ] is equal to 0, all transform coefficient levels of the subblock at location ( xS, yS ) are inferred to be equal to 0.
When sb_coded_flag[ xS ][ yS ] is not present, it is inferred to be equal to 1.
**sig_coeff_flag[ xC ][ yC ]** specifies for the transform coefficient location ( xC, yC ) within the current transform block whether the corresponding transform coefficient level at the location ( xC, yC ) is non-zero as follows:

–  If sig_coeff_flag[ xC ][ yC ] is equal to 0, the transform coefficient level at the location ( xC, yC ) is set equal to 0.

–  Otherwise (sig_coeff_flag[ xC ][ yC ] is equal to 1), the transform coefficient level at the location ( xC, yC ) has a non-zero value.

When sig_coeff_flag[ xC ][ yC ] is not present, it is inferred as follows:

–  If transform_skip_flag[ x0 ][ y0 ][ cIdx ] is equal to 0 or sh_ts_residual_coding_disabled_flag is equal to 1, the following applies:

 –  If ( xC, yC ) is the last significant location ( LastSignificantCoeffX, LastSignificantCoeffY ) in scan order or all of the following conditions are true, sig_coeff_flag[ xC ][ yC ] is inferred to be equal to 1:

  –  ( xC & ( ( 1 << log2SbW ) − 1 ), yC & ( ( 1 << log2SbH ) − 1 ) ) is equal to ( 0, 0 ).

  –  inferSbDcSigCoeffFlag is equal to 1.

  –  sb_coded_flag[ xS ][ yS ] is equal to 1.

 –  Otherwise, sig_coeff_flag[ xC ][ yC ] is inferred to be equal to 0.

–  Otherwise (transform_skip_flag[ x0 ][ y0 ][ cIdx ] is equal to 1 and sh_ts_residual_coding_disabled_flag is equal to 0), the following applies:

 –  If all of the following conditions are true, sig_coeff_flag[ xC ][ yC ] is inferred to be equal to 1:

  –  ( xC & ( ( 1 << log2SbW ) − 1 ), yC & ( ( 1 << log2SbH ) − 1 ) ) is equal to ( ( 1 << log2SbW ) − 1, ( 1 << log2SbH ) − 1 ).

  –  inferSbSigCoeffFlag is equal to 1.

  –  sb_coded_flag[ xS ][ yS ] is equal to 1.

 –  Otherwise, sig_coeff_flag[ xC ][ yC ] is inferred to be equal to 0.

---

**abs_level_gtx_flag**[ n ][ j ] specifies whether the absolute value of the transform coefficient level (at scanning position n) is greater than ( j << 1 ) + 1. When abs_level_gtx_flag[ n ][ j ] is not present, it is inferred to be equal to 0.

**par_level_flag**[ n ] specifies the parity of the transform coefficient level at scanning position n. When par_level_flag[ n ] is not present, it is inferred to be equal to 0.

**abs_remainder**[ n ] is the remaining absolute value of a transform coefficient level that is coded with Golomb-Rice code at the scanning position n. When abs_remainder[ n ] is not present, it is inferred to be equal to 0.

It is a requirement of bitstream conformance that the value of abs_remainder[ n ] shall be constrained such that the corresponding value of TransCoeffLevel[ x0 ][ y0 ][ cIdx ][ xC ][ yC ] is in the range of CoeffMin to CoeffMax, inclusive.

**dec_abs_level**[ n ] is an intermediate value that is coded with Golomb-Rice code at the scanning position n. Given ZeroPos[ n ] that is derived in clause 1.2.2 during the parsing of dec_abs_level[ n ], the absolute value of a transform coefficient level at location ( xC, yC ) AbsLevel[ xC ][ yC ] is derived as follows:

–  If dec_abs_level[ n ] is not present or equal to ZeroPos[ n ], AbsLevel[ xC ][ yC ] is set equal to 0.

–  Otherwise, if dec_abs_level[ n ] is less than ZeroPos[ n ], AbsLevel[ xC ][ yC ] is set equal to dec_abs_level[ n ] + 1;

–  Otherwise (dec_abs_level[ n ] is greater than ZeroPos[ n ]), AbsLevel[ xC ][ yC ] is set equal to dec_abs_level[ n ].

It is a requirement of bitstream conformance that the value of dec_abs_level[ n ] shall be constrained such that the corresponding value of TransCoeffLevel[ x0 ][ y0 ][ cIdx ][ xC ][ yC ] is in the range of CoeffMin to CoeffMax, inclusive.

**coeff_sign_flag**[ n ] specifies the sign of a transform coefficient level for the scanning position n as follows:

–  If coeff_sign_flag[ n ] is equal to 0, the corresponding transform coefficient level has a positive value.

–  Otherwise (coeff_sign_flag[ n ] is equal to 1), the corresponding transform coefficient level has a negative value.

When coeff_sign_flag[ n ] is not present, it is inferred to be equal to 0.

The value of CoeffSignLevel[ xC ][ yC ] specifies the sign of a transform coefficient level at the location ( xC, yC ) as follows:

–  If CoeffSignLevel[ xC ][ yC ] is equal to 0, the corresponding transform coefficient level is equal to zero

---

–  Otherwise, if CoeffSignLevel[ xC ][ yC ] is equal to 1, the corresponding transform coefficient level has a positive value.

–  Otherwise (CoeffSignLevel[ xC ][ yC ] is equal to −1), the corresponding transform coefficient level has a negative value.

In this document, as described above, information (or syntax elements) can be encoded/decoded according to CABAC, etc., and the context model used in this case can be derived as follows, for example. For convenience of explanation, the method and/or procedure for deriving the context model are described in the format used in standard documents such as HEVC or VVC standards, and the details presented are obvious to those skilled in the art.

For example, the table below illustrates an example of assigning a context index increment (ctxInc) to the syntax elements of context-coded bins.

【Table 7】

| Syntax element | binIdx | | | | | |
| --- | --- | --- | --- | --- | --- | --- |
| | 0 | 1 | 2 | 3 | 4 | >= 5 |
| tu_y_coded_flag[ ][ ] | 0,1,2,3 | na | na | na | na | na |
| tu_cb_coded_flag[ ][ ] | intra_bdpcm_chroma_fla g ? 1 : 0 | na | na | na | na | na |
| tu_cr_coded_flag[ ][ ] | intra_bdpcm_chroma_fla g ? 2 : tu_cb_coded_flag[ ][ ][ ] | na | na | na | na | na |
| cu_qp_delta_abs | 0 | 1 | 1 | 1 | 1 | bypass |
| cu_qp_delta_sign_flag | bypass | na | na | na | na | na |
| cu_chroma_qp_offset_flag | 0 | na | na | na | na | na |
| cu_chroma_qp_offset_idx | 0 | 0 | 0 | 0 | 0 | na |
| transform_skip_flag[ ][ ][ cIdx ] | cIdx = = 0 ? 0 : 1 | na | na | na | na | na |
| tu_joint_cbcr_residual_fla g[ ][ ] | 2*tu_cb_coded_flag[ ][ ] + tu_cr_coded_flag[ ][ ] − 1 | na | na | na | na | na |
| last_sig_coeff_x_prefix | 0..22 | | | | | |
| last_sig_coeff_y_prefix | 0..22 | | | | | |
| last_sig_coeff_x_suffix | bypass | bypass | bypass | bypass | bypass | bypass |
| last_sig_coeff_y_suffix | bypass | bypass | bypass | bypass | bypass | bypass |
| sb_coded_flag[ ][ ] | 0..6 | na | na | na | na | na |
| sig_coeff_flag[ ][ ] | 0..62 | na | na | na | na | na |
| par_level_flag[ ] | 0..32 | na | na | na | na | na |
| abs_level_gtx_flag[ ] | 0..71 | na | na | na | na | na |
| abs_remainder[ ] | bypass | bypass | bypass | bypass | bypass | bypass |
| dec_abs_level[ ] | bypass | bypass | bypass | bypass | bypass | bypass |
| coeff_sign_flag[ ] transform_skip_flag[ x0 ][ y0 ][ cIdx ] = = 0    ‖    n > lastScanPosPass1    ‖ sh_ts_residual_coding_dis abled_flag | bypass | na | na | na | na | na |
| coeff_sign_flag[ ] transform_skip_flag[ x0 ][ y0 ][ cIdx ] = = 1    && n <= lastScanPosPass1 &&    !sh_ts_residual_codi ng_disabled_flag | 0..5 | na | na | na | na | na |

Additionally, the table below illustrates an example of the procedure for deriving the context index increment for the last_sig_coeff_x_prefix and last_sig_coef_y_prefix syntax elements in a standard document format.

【Table 8】

Inputs to this process are the variable binIdx, the colour component index cIdx, the binary logarithm of the transform block width log2TbWidth and the transform block height log2TbHeight.
Output of this process is the variable ctxInc.
The variable log2TbSize is derived as follows:

– If the syntax element to be parsed is last_sig_coeff_x_prefix, log2TbSize is set equal to log2TbWidth.

– Otherwise (the syntax element to be parsed is last_sig_coeff_y_prefix), log2TbSize is set equal to log2TbHeight.
The variables ctxOffset and ctxShift are derived as follows:

– If cIdx is equal to 0, ctxOffset is set equal to offsetY[ log2TbSize − 1 ] and ctxShift is set equal to ( log2TbSize + 1 ) >> 2 with the list offsetY specified as follows:

$$offsetY[\ ] = \{0, 0, 3, 6, 10, 15\} \hspace{2cm} (27)$$

– Otherwise (cIdx is greater than 0), ctxOffset is set equal to 20 and ctxShift is set equal to Clip3( 0, 2, $2^{log2TbSize}$ >> 3 ).
The variable ctxInc is derived as follows:

$$ctxInc = (\ binIdx \ >> \ ctxShift\ ) + ctxOffset \hspace{2cm} (28)$$

Additionally, the table below illustrates an example of the procedure for deriving the context index increment for the tu_y_coded_flag syntax element in a standard document format.

【Table 9】

Input to this process is the luma location ( x0, y0 ) specifying the top-left sample of the current transform block relative to the top-left sample of the current picture.
Output of this process is the variable ctxInc.
The variable ctxInc is derived as follows:

– If BdpcmFlag[ x0 ][ y0 ][ 0 ] is equal to 1, ctxInc is set equal to 1.

– Otherwise, if IntraSubPartitionsSplitType is equal to ISP_NO_SPLIT, ctxInc is set equal to 0.

– Otherwise (BdpcmFlag[ x0 ][ y0 ][ 0 ] is equal to 0 and IntraSubPartitionsSplitType is not equal to ISP_NO_SPLIT), the following applies:

  – The variable prevTuCbfY is derived as follows:

    – If the current transform unit is the first one to be parsed in a coding unit, prevTuCbfY is set equal to 0.

    – Otherwise, prevTuCbfY is set equal to the value of tu_y_coded_flag of the previous luma transform unit in the current coding unit.

  – The variable ctxInc is derived as follows:

$$ctxInc = 2 + prevTuCbfY \hspace{2cm} (29)$$

Additionally, the table below illustrates an example of the procedure for deriving the context index increment for the sb_coded_flag syntax element in a standard document format.

【Table 10】

Inputs to this process are the colour component index cIdx, the current sub-block scan location ( xS, yS ), the previously decoded bins of the syntax element sb_coded_flag and the binary logarithm of the transform block width log2TbWidth and the transform block height log2TbHeight.

Output of this process is the variable ctxInc.

The variable csbfCtx is derived using the current location ( xS, yS ), two previously decoded bins of the syntax element sb_coded_flag in scan order, log2TbWidth and log2TbHeight, as follows:

- The variables log2SbWidth and log2SbHeight are dervied as follows:

$$\log2SbWidth = ( Min( \log2TbWidth, \log2TbHeight ) < 2 \quad ? \quad 1 \quad : \quad 2 ) \tag{30}$$

$$\log2SbHeight = \log2SbWidth \tag{31}$$

- The variables log2SbWidth and log2SbHeight are modified as follows:
  - If log2TbWidth is less than 2 and cIdx is equal to 0, the following applies

$$\log2SbWidth = \log2TbWidth \tag{32}$$

$$\log2SbHeight = 4 - \log2SbWidth \tag{33}$$

  - Otherwise, if log2TbHeight is less than 2 and cIdx is equal to 0, the following applies

$$\log2SbHeight = \log2TbHeight \tag{34}$$

$$\log2SbWidth = 4 - \log2SbHeight \tag{35}$$

- The variable csbfCtx is initialized with 0 and modified as follows:
  - If transform_skip_flag[ xS ][ yS ] is equal to 1, the following applies:
    - When xS is greater than 0, csbfCtx is modified as follows:

$$csbfCtx \quad += \quad sb\_coded\_flag[ xS - 1 ][ yS ] \tag{36}$$

    - When yS is greater than 0, csbfCtx is modified as follows:

$$csbfCtx \quad += \quad sb\_coded\_flag[ xS ][ yS - 1 ] \tag{37}$$

  - Otherwise (transform_skip_flag[ xS ][ yS ] is equal to 0), the following applies:
    - When xS is less than ( 1 << ( log2TbWidth - log2SbWidth ) ) - 1, csbfCtx is modified as follows:

$$csbfCtx \quad += \quad sb\_coded\_flag[ xS + 1 ][ yS ] \tag{38}$$

    - When yS is less than ( 1 << ( log2TbHeight - log2SbHeight ) ) - 1, csbfCtx is modified as follows:

$$csbfCtx \quad += \quad sb\_coded\_flag[ xS ][ yS + 1 ] \tag{39}$$

The context index increment ctxInc is derived using the colour component index cIdx and csbfCtx as follows:

- If cIdx is equal to 0, ctxInc is derived as follows:
  - If transform_skip_flag[ xS ][ yS ] is equal to 1, the following applies:

$$ctxInc = 4 + csbfCtx \tag{40}$$

  - Otherwise (transform_skip_flag[ xS ][ yS ] is equal to 0), the following applies:

$$ctxInc = Min( csbfCtx, 1 ) \tag{41}$$

- Otherwise (cIdx is greater than 0), ctxInc is derived as follows:

$$ctxInc = 2 + Min( csbfCtx, 1 ) \tag{42}$$

Additionally, the table below illustrates an example of the procedure for deriving the locNumSig and locSumAbsPass 1 variables in a standard document format.

【Table 11】

```
Inputs to this process are the colour component index cIdx, the luma location ( x0, y0 ) specifying the top-left
sample of the current transform block relative to the top-left sample of the current picture, the current coefficient
scan location ( xC, yC ), the binary logarithm of the transform block width log2TbWidth, and the binary
logarithm of the transform block height log2TbHeight.
Outputs of this process are the variables locNumSig and locSumAbsPass1.
Given the syntax elements sig_coeff_flag[ x ][ y ] and the array AbsLevelPass1[ x ][ C ] for the transform block
with component index cIdx and the top-left luma location ( x0, y0 ), the variables locNumSig and
locSumAbsPass1 are derived as specified by the following pseudo code:
        locNumSig        = 0
        locSumAbsPass1 = 0
        if( transform_skip_flag[ xS ][ yS ] ) {
            if( xC > 0 ) {
                locNumSig            += sig_coeff_flag[ xC − 1 ][ yC ]
                locSumAbsPass1 += AbsLevelPass1[ xC − 1 ][ yC ]
            }
            if( yC > 0 ) {
                locNumSig            += sig_coeff_flag[ xC ][ yC − 1 ]
                locSumAbsPass1 += AbsLevelPass1[ xC ][ yC − 1 ]
            }
        } else {
            if( xC < (1 << log2TbWidth) − 1 ) {
                locNumSig            += sig_coeff_flag[ xC + 1 ][ yC ]
                locSumAbsPass1 += AbsLevelPass1[ xC + 1 ][ yC ]
                if( xC < (1 << log2TbWidth) − 2 ) {
                    locNumSig            += sig_coeff_flag[ xC + 2 ][ yC ]
                    locSumAbsPass1 += AbsLevelPass1[ xC + 2 ][ yC ]
                }
                if( yC < (1 << log2TbHeight) − 1 ) {
                    locNumSig            += sig_coeff_flag[ xC + 1 ][ yC + 1 ]
                    locSumAbsPass1 += AbsLevelPass1[ xC + 1 ][ yC + 1 ]
                }
            }
            if( yC < (1 << log2TbHeight) − 1 ) {
                locNumSig            += sig_coeff_flag[ xC ][ yC + 1 ]
                locSumAbsPass1 += AbsLevelPass1[ xC ][ yC + 1 ]
                if( yC < (1 << log2TbHeight) − 2 ) {
                    locNumSig            += sig_coeff_flag[ xC ][ yC + 2 ]
                    locSumAbsPass1 += AbsLevelPass1[ xC ][ yC + 2 ]
                }
            }
        }
    }
```
(43)

Additionally, the table below illustrates an example of the procedure for deriving the context index increment for the sig_coeff_flag syntax element in a standard document format.

【Table 12】

Inputs to this process are the colour component index cIdx, the luma location ( x0, y0 ) specifying the top-left sample of the current transform block relative to the top-left sample of the current picture, the current coefficient scan location ( xC, yC ), the binary logarithm of the transform block width log2TbWidth, and the binary logarithm of the transform block height log2TbHeight.

Output of this process is the variable ctxInc.

The variable locSumAbsPass1 is derived by invoking the derivation process for the variables locNumSig and locSumAbsPass1 specifies in clause 1.3.4 with colour component index cIdx, the luma location ( x0, y0), the current coefficient scan location (xC, yC ), the binary logarithm of the transform block width log2TbWidth, and the binary logarithm of the transform block height log2TbHeight as input.

The variable d is set equal to xC + yC.

The variable ctxInc is derived as follows:

- If transform_skip_flag[ x0 ][ y0 ][ cIdx ] is equal to 1, the following applies:

$$ctxInc = 60 + locNumSig \qquad (44)$$

- Otherwise ( transform_skip_flag[ x0 ][ y0 ][ cIdx ] is equal to 0), the following applies:
  - If cIdx is equal to 0, ctxInc is derived as follows:

$$ctxInc = 12 * Max( 0, QState − 1) + Min( ( locSumAbsPass1 + 1 ) >> 1, 3 ) + \qquad (45)$$
$$( d < 2 ? 8 : ( d < 5 ? 4 : 0 ))$$

  - Otherwise (cIdx is greater than 0), ctxInc is derived as follows:

$$ctxInc = 36 + 8 * Max( 0, QState − 1) + Min( ( locSumAbsPass1 + 1 ) >> 1, 3 ) + ( d < 2 ? 4 : 0 ) \qquad (46)$$

Additionally, the table below illustrates an example of the procedure for deriving the context index increment for the par_level_flag and abs_level_gtx_flag syntax elements in a standard document format.

【Table 13】

Inputs to this process are the colour component index cIdx, the luma location ( x0, y0 ) specifying the top-left sample of the current transform block relative to the top-left sample of the current picture, the current coefficient scan location ( xC, yC ), the binary logarithm of the transform block width log2TbWidth, and the binary logarithm of the transform block height log2TbHeight.
Output of this process is the variable ctxInc.
The variable ctxInc is derived as follows:

– If transform_skip_flag[ x0 ][ y0 ][ cIdx ] is equal to 1 and sh_ts_residual_coding_disabled_flag is equal to 0, the following applies:

    – If the syntax element is par_level_flag[ n ], the following applies:

$$ctxInc = 32 \tag{47}$$

    – Otherwise, if the syntax element is abs_level_gtx_flag[ n ][ 0 ], the following applies:

        – If BdpcmFlag[ x0 ][ y0 ][ cIdx ] is equal to 1, ctxInc is derived as follows:

$$ctxInc = 67 \tag{48}$$

        – Otherwise, if xC is greater than 0 and yC is greater than 0, ctxInc is derived as follows:

$$ctxInc = 64 + sig\_coeff\_flag[ xC - 1 ][ yC ] + sig\_coeff\_flag[ xC ][ yC - 1 ] \tag{49}$$

        – Otherwise, if xC is greater than 0, ctxInc is derived as follows:

$$ctxInc = 64 + sig\_coeff\_flag[ xC - 1 ][ yC ] \tag{50}$$

        – Otherwise, if yC is greater than 0, ctxInc is derived as follows:

$$ctxInc = 64 + sig\_coeff\_flag[ xC ][ yC - 1 ] \tag{51}$$

        – Otherwise, ctxInc is derived as follows:

$$ctxInc = 64 \tag{52}$$

    – Otherwise, if the syntax element is abs_level_gtx_flag[ n ][ j ] with j > 0, the following applies:

---

$$ctxInc = 67 + j \tag{53}$$

– Otherwise (transform_skip_flag[ x0 ][ y0 ][ cIdx ] is equal to 0 or sh_ts_residual_coding_disabled_flag is equal to 1), the following applies:

    – The variable locNumSig and locSumAbsPass1 is derived by invoking the derivation process for the variables locNumSig and locSumAbsPass1 specifies in clause 1.3.4 with colour component index cIdx, the luma location ( x0, y0 ), the current coefficient scan location (xC, yC ), the binary logarithm of the transform block width log2TbWidth, and the binary logarithm of the transform block height log2TbHeight as input.

    – The variable ctxOffset is set equal to Min( locSumAbsPass1 − locNumSig, 4 ).

    – The variable d is set equal to xC + yC.

        – If xC is equal to LastSignificantCoeffX and yC is equal to LastSignificantCoeffY, ctxInc is derived as follows:

$$ctxInc = ( cIdx == 0 ? 0 : 21 ) \tag{54}$$

        – Otherwise, if cIdx is equal to 0, ctxInc is derived as follows:

$$ctxInc = 1 + ctxOffset + ( d == 0 ? 15 : ( d < 3 ? 10 : ( d < 10 ? 5 : 0 ) ) ) \tag{55}$$

        – Otherwise (cIdx is greater than 0), ctxInc is derived as follows:

$$ctxInc = 22 + ctxOffset + ( d == 0 ? 5 : 0 ) \tag{56}$$

    – When the syntax element is abs_level_gtx_flag[ n ][ 1 ], the following applies:

$$ctxInc \mathrel{+}= 32 \tag{57}$$

Additionally, the table below illustrates an example of the procedure for deriving the context index increment for the coeff_sign_flag syntax element in transform skip mode in a standard document format.

【Table 14】

Inputs to this process are the colour component index cIdx, the luma location ( x0, y0 ) specifying the top-left sample of the current transform block relative to the top-left sample of the current picture, the current coefficient scan location ( xC, yC )

Output of this process is the variable ctxInc.

The variables leftSign and aboveSign are derived as follows:

$$leftSign = ( xC \quad == \quad 0 ) ? 0 : CoeffSignLevel[ xC - 1 ][ yC ] \tag{58}$$

$$aboveSign = ( yC \quad == \quad 0 ) ? 0 : CoeffSignLevel[ xC ][ yC - 1 ] \tag{59}$$

The variable ctxInc is derived as follows:

- If leftSign is equal to 0 and aboveSign is equal to 0, or if leftSign is equal to −aboveSign, the following applies:

$$ctxInc = ( BdpcmFlag[ x0 ][ y0 ][ cIdx ] == 0 ? 0 : 3 ) \tag{60}$$

- Otherwise, if leftSign is greater than or equal to 0 and aboveSign is greater than or equal to 0, the following applies:

$$ctxInc = ( BdpcmFlag[ x0 ][ y0 ][ cIdx ] == 0 ? 1 : 4 ) \tag{61}$$

- Otherwise, the following applies:

$$ctxInc = ( BdpcmFlag[ x0 ][ y0 ][ cIdx ] == 0 ? 2 : 5 ) \tag{62}$$

Meanwhile, to perform efficient coding by controlling the number of the context-coded bins, the following embodiments can be applied. Each embodiment can be applied individually or in combination.

As one embodiment, a method is proposed to control the number of context-coded bins by using the location information of the last significant coefficient, i.e., the last non-zero coefficient, within the current transform block. In the current standard, the method of controlling context-coded bins based on the transform block size is used. More specifically, in the conventional method of controlling context-coded bins using the transform block size, the maximum number of context-coded bins, MaxCCB, that can be used in the current transform block can be determined through the following equation. Here, TBWidth and TBHeight refer to the width and height of the transform block, respectively.

【Equation 7】

$$MaxCCB = TBWidth \times TBHeight \times c$$

For example, when high frequency zero out is applied, TBWidth and TBHeight can refer to the effective transform block width and height after zero out, respectively. Additionally, $c$ represents a real number indicating the allowable range of the number of context codings per pixel, and for example, a value of 1.75 can be used.

In this embodiment, the specification proposes a method to check whether the position of the last significant coefficient within the transform block is less than a threshold, and if it is less than the threshold, determine the maximum number of context-coded bins using the threshold. Here, the threshold can be referred to as a critical value.

Here, in comparing the position of the last significant coefficient with the threshold, various methods can be used. For example, the position of the last significant coefficient can be represented by the x-coordinate or y-coordinate. In other words, the position x-coordinate or y-coordinate of the last significant coefficient can be compared with the threshold value. Additionally, for example, it can be represented as the sum of the position x-coordinate and y-coordinate of the last significant coefficient. In other words, the sum of the x-coordinate and y-coordinate of the position of the last significant coefficient can be compared to the threshold. Furthermore, the position of the last significant coefficient can also be represented using the LastSigCoeffScanIdx. In other words, the position of the last significant coefficient, LastSigCoeffScanIdx, can be compared to the threshold.

For example, if the position of the last significant coefficient is less than ThPos, the maximum number of context-coded bins, MaxCCB, that can be used in the current transform block can be determined using ThPos through the following equation. Here, $c$ represents a real number indicating the allowable range of the number of context codings per pixel, and for example, a value of 1.75 can be used.

【Equation 8】

$$MaxCCB = ThPos \times c$$

At this time, in the proposed method, the MaxCCB value must always be an integer. However, since $c$ is a real number, there may be cases where the result of the calculation from equation 8 is not an integer. In such cases, the result of the calculation rounded up or down to the nearest integer can be used as MaxCCB.

For example, although this specification does not specifically limit cases where the position of the last significant coefficient is greater than or equal to ThPos, the context-coded bin control method using the transform block size of the current standard, as shown in equation 7, can also be used.

Additionally, when LFNST is applied, only N (e.g., 16 or 32) residual coefficients can exist. If the number of residual coefficients after LFNST, which is determined block-by-block, is used as a threshold through the proposed method, the number of context-coded bins of the actually used transform block can be reduced while maintaining the encoding performance as much as possible. In other words, compared to the conventional method of controlling context-coded bins using the transform block size, the actual MaxCCB can be specified, thereby reducing the total number of context-coded bins.

For example, when using the conventional method of controlling context-coded bins based on the transform block size for a 16x16 block, if c is 1.75, MaxCCB = TBWidth $\times$ TBHeight $\times$ 1.75 = 16 $\times$ 16 $\times$ 1.75 = 448, and if there are 16 non-zero coefficients in the current transform block, 28 context-coded bins are assigned per coefficient. However, when using the proposed method, if ThPos is 16, the method of controlling context-coded bins based on the position of the last significant coefficient in the transform block is applied for the 16x16 block. In this case, if c is 1.75, MaxCCB = ThPos $\times$ 1.75 = 16 $\times$ 1.75 = 28, and if there are 16 non-zero coefficients in the current transform block, exactly 1.75 context-coded bins are assigned per coefficient.

Accordingly, through the proposed method, the number of context-coded bins allowed within the transform block is limited, and if it exceeds MaxCCB, the syntaxes of the residual coefficient are encoded as a bypass bin. Through this, the throughput of residual coding can be increased while maintaining coding performance.

As an embodiment, the specification proposes a method to check whether the position of the last significant coefficient within the transform block is less than a threshold, and if it is less than the threshold, determine the maximum number of context-coded bins using the position of the last significant coefficient.

Here, in comparing the position of the last significant coefficient with the threshold, various methods can be used. For example, the position of the last significant coefficient can be represented by the x-coordinate or y-coordinate. In other words, the position x-coordinate or y-coordinate of the last significant coefficient can be compared with the threshold value. Additionally, for example, it can be represented as the sum of the position x-coordinate and y-coordinate of the last significant coefficient. In other words, the sum of the x-coordinate and y-coordinate of the position of the last significant coefficient can be compared to the threshold. Furthermore, the position of the last significant coefficient can also be represented using the LastSigCoeffScanIdx. In other words, the position of the last significant coefficient, LastSigCoeffScanIdx, can be compared to the threshold.

For example, if the position of the last significant coefficient is less than ThPos, the maximum number of context-coded bins, MaxCCB, that can be used in the current transform block can be determined using the position of the last significant coefficient, LastSigCoeffScanIdx, through the following equation. Here, c represents a real number indicating the allowable range of the number of context codings per pixel, and for example, a value of 1.75 can be used.

【Equation 9】

$$MaxCCB = (LastSigCoeffScanIdx + 1) \times c$$

At this time, in the proposed method, the MaxCCB value must always be an integer. However, since c is a real number, there may be cases where the result of the calculation from equation 9 is not an integer. In such cases, the result of the calculation rounded up or down to the nearest integer can be used as MaxCCB.

For example, although this specification does not specifically limit cases where the position of the last significant coefficient is greater than or equal to ThPos, the context-coded bin control method using the transform block size of the current standard, as shown in equation 7, can also be used.

Additionally, when LFNST is applied, only N (e.g., 16 or 32) residual coefficients can exist. If the number of residual coefficients after LFNST, which is determined block-by-block, is used as a threshold through the proposed method, the number of context-coded bins of the actually used transform block can be reduced while maintaining the encoding performance as much as possible. In other words, compared to the conventional method of controlling context-coded bins using the transform block size, the actual MaxCCB can be specified, thereby reducing the total number of context-coded bins.

For example, when using the conventional method of controlling context-coded bins based on the transform block size for a 16x16 block, if c is 1.75, MaxCCB = TBWidth $\times$ TBHeight $\times$ 1.75 = 16 $\times$ 16 $\times$ 1.75 = 448, and if there are 16 non-zero coefficients in the current transform block, 28 context-coded bins are assigned per coefficient. However, when using the proposed method, if ThPos is 16 and the position index of the last significant coefficient, LastScanIdx, is 7, which means it is the 8th pixel from (0,0), the method of controlling context-coded bins based on the position of the last significant coefficient within the transform block is applied. In this case, if c is 1.75, MaxCCB = (LastScanIdx + 1) × 1.75 = 8 × 1.75 = 14, and if there are 8 non-zero coefficients in the current transform block, exactly 1.75 context-coded bins are assigned per coefficient. When using embodiment 1, there is a difference from the present embodiment in that MaxCCB = ThPos × 1.75 = 16 × 1.75 = 28, meaning about 3.5 context-coded bins are assigned for the 8 coefficients.

Accordingly, through the proposed method, the number of context-coded bins allowed within the transform block is limited, and if it exceeds MaxCCB, the syntaxes of the residual coefficient are encoded as a bypass bin. Through this, the throughput of residual coding can be increased while maintaining coding performance.

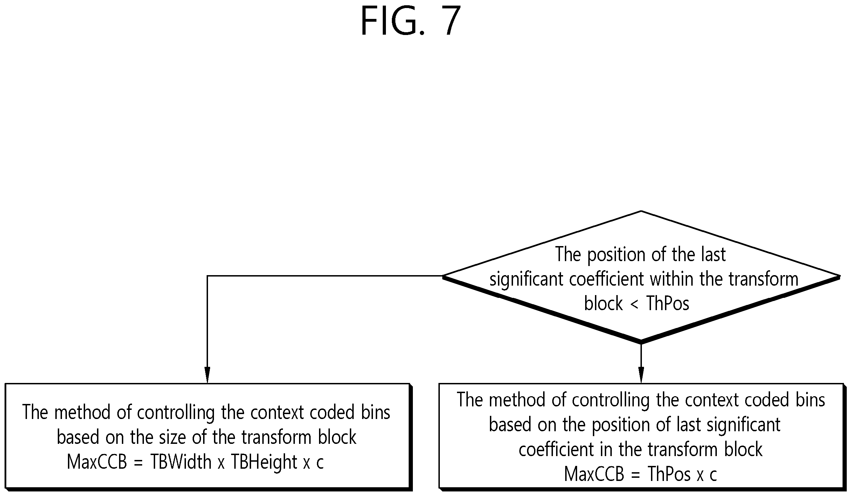

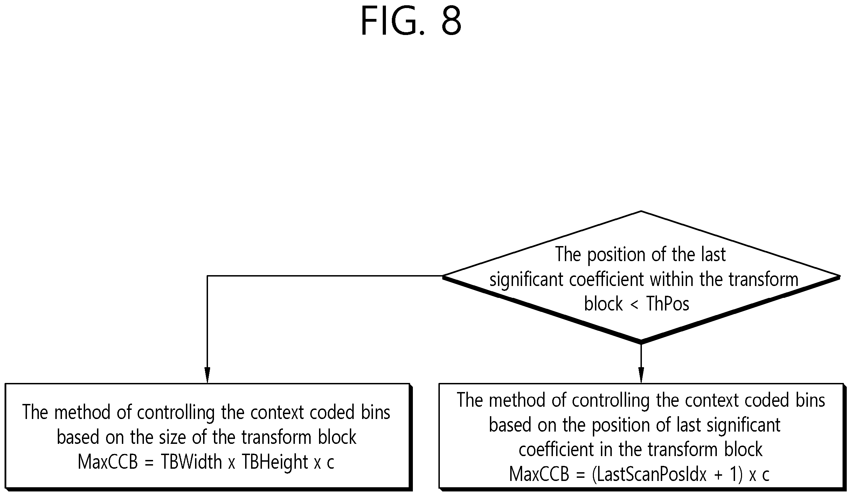

FIG. 7 and FIG. 8 exemplarily represent methods for controlling the number of context coded bins proposed in this document.

According to FIG. 7 and FIG. 8, the number of context-coded bins can be controlled using the position information of the last significant coefficient, i.e., the last non-zero coefficient, within the current transform block.

For example, according to FIG. 7, if the position of the last significant coefficient within the current transform block is less than the threshold, the maximum number of context-coded bins (MaxCCB) that can be used in the current transform block can be derived based on the threshold. Specifically, the maximum number of context-coded bins that can be used can be derived through the aforementioned equation 8, based on the threshold. Conversely, if the position of the last significant coefficient within the current transform block is greater than or equal to the threshold, the maximum number of context-coded bins that can be used can be derived through the aforementioned equation 7, based on the transform block size.

For example, according to FIG. 8, if the position of the last significant coefficient within the current transform block is less than the threshold, the maximum number of context-coded bins (MaxCCB) that can be used in the current transform block can be derived based on the position of the last significant coefficient, LastSigCoeffScanIdx. Specifically, the maximum number of context-coded bins that can be used can be derived through the aforementioned equation 9, based on the LastSigCoeffScanIdx. Conversely, if the position of the last significant coefficient within the current transform block is greater than or equal to the threshold, the maximum number of context-coded bins that can be used can be derived through the aforementioned equation 7, based on the transform block size.

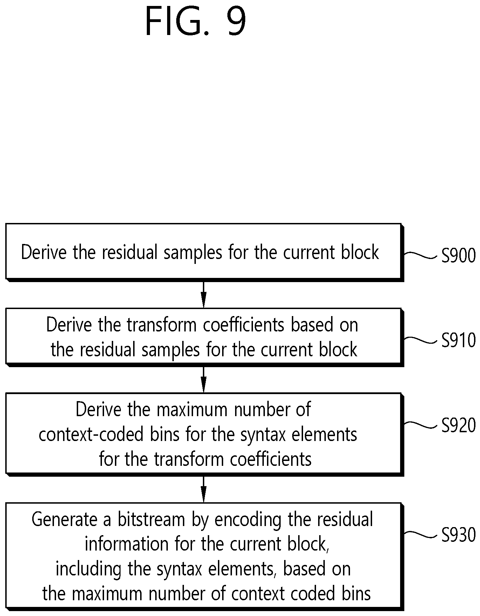

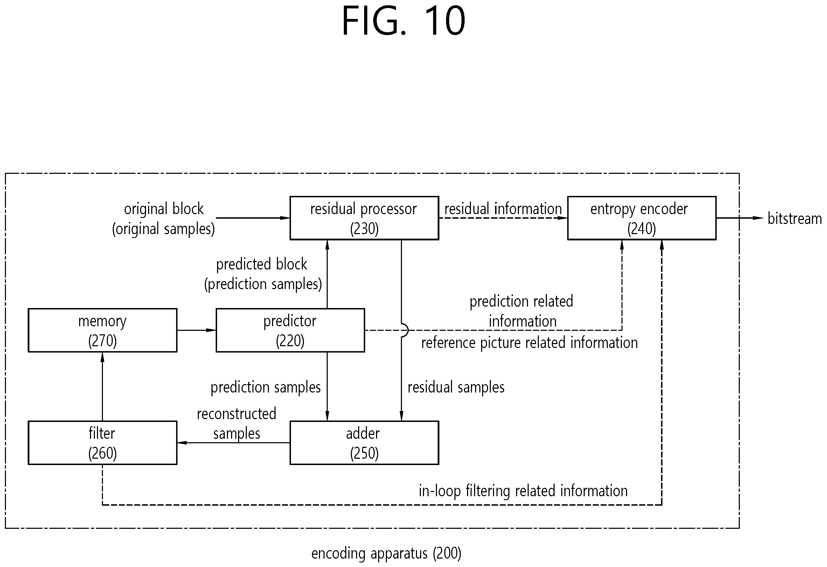

FIG. 9 and FIG. 10 schematically illustrates an example of a video/image encoding method and related components according to an embodiment of the present disclosure.

The method disclosed in FIG. 9 can be performed by the encoding apparatus disclosed in FIG. 2 or FIG. 10. Specifically, for example, S900 to S910 of FIG. 9 can be performed by the residual processing unit of the encoding apparatus, and S920 to S930 can be performed by the entropy encoding unit (240) of the encoding apparatus. Additionally, although not illustrated in FIG. 9, prediction samples for the current block can be generated by the prediction unit (220) of the encoding apparatus, and the process of generating reconstructed samples for the current block based on the residual samples and prediction samples for the current block can be performed by the adder unit of the encoding apparatus. The process of encoding the prediction information for the current block can be performed by the entropy encoding unit of the encoding apparatus. The method disclosed in FIG. 9 may include the embodiments described in this document.

Referring to FIG. 9, the encoding apparatus derives the residual samples for the current block (S900). For example, the encoding apparatus can derive the residual samples for the current block according to the aforementioned embodiments.

For example, the encoding apparatus can determine whether to perform inter prediction or intra prediction for the current block and can decide the specific inter prediction mode or specific intra prediction mode. Based on the determined mode, the encoding apparatus can derive prediction samples for the current block, and through the subtraction of the original samples of the current block and the prediction samples, it can generate the residual samples.

The encoding apparatus derives the transform coefficients based on the residual samples for the current block (S910). For example, the encoding apparatus can derive the transform coefficients based on the residual samples for the current block according to the aforementioned embodiments.

For example, the encoding apparatus can determine whether a transform is applied to the residual samples. If a transform is not applied to the residual samples, the encoding apparatus can derive the generated residual samples as the transform coefficients. Additionally, if a transform is applied to the residual samples, the encoding apparatus performs a transform on the generated residual samples to derive the transform coefficients.

The encoding apparatus derives the maximum number of context-coded bins for the syntax elements for the transform coefficients (S920). For example, the encoding apparatus can derive the maximum number of context coded bins for the syntax elements for the transform coefficients according to the aforementioned embodiments.

For example, the maximum number of context coded bins can be derived based on the position of the last significant coefficient of the current block. Additionally, for example, the maximum number of context coded bins can be derived based on whether the position of the last significant coefficient is less than the threshold.

For example, if the position of the last significant coefficient is less than the threshold, the maximum number of context coded bins can be derived based on the threshold. In this case, the maximum number of context coded bins for the syntax elements can be derived based on the aforementioned equation 8. In other words, the maximum number of context coded bins can be derived by multiplying the threshold by c. At this time, in equation 8, c may be 1.75, but it is not limited to this value, as c can be another real number.

Additionally, if the position of the last significant coefficient is less than the threshold, the maximum number of context coded bins can be derived based on the position value of the last significant coefficient. In this case, the maximum number of context coded bins for the elements can be derived based on the aforementioned equation 9. In other words, the maximum number of context coded bins can be derived by multiplying a value of the position value of the last significant coefficient plus 1 by c. At this time, in equation 9, c can be 1.75, but it is not limited to this value, and c can be another real number.

In contrast, based on the position of the last significant coefficient being greater than or equal to the threshold, the maximum number of context coded bins can be derived based on the width of the transform block and the height of the transform block.

Here, in comparing the position of the last significant coefficient with the threshold, various methods can be used. For example, the position of the last significant coefficient can be represented by the x-coordinate or y-coordinate. In other words, the position x-coordinate or y-coordinate of the last significant coefficient can be compared with the threshold value. Additionally, for example, it can be represented as the sum of the position x-coordinate and y-coordinate of the last significant coefficient. In other words, the sum of the x-coordinate and y-coordinate of the position of the last significant coefficient can be compared to the threshold. Furthermore, the position of the last significant coefficient can also be represented using the LastSigCoeffScanIdx. In other words, the position of the last significant coefficient, LastSigCoeffScanIdx, can be compared to the threshold.

The encoding apparatus generates a bitstream by encoding the residual information for the current block, including the syntax elements, based on the maximum number of context coded bins (S930). For example, the encoding apparatus can generate a bitstream by encoding the residual information for the current block, including the syntax elements, based on the maximum number of context coded bins, according to the aforementioned embodiments.

For example, based on the maximum number of context coded bins, it can encode the significant coefficient flag indicating whether the transform coefficient is a non-zero transform coefficient, the parity level flag for parity of the transform coefficient level for the transform coefficient, the first transform coefficient level flag indicating whether the transform coefficient level is greater than the first threshold, and the second transform coefficient level flag indicating whether the transform coefficient level of the transform coefficient is greater than the second threshold. Here, the significant coefficient flag can be the sig_coeff_flag, the parity level flag can be the par_level_flag, the first transform coefficient level flag can be the abs _level_gtx flag[n][0], and the second transform coefficient level flag can be the abs_level_gtx_flag[n][1].

Additionally, for example, the residual information can include syntax elements such as last_sig_coeff_x_prefix, last_sig_coeff_y_prefix, last_sig_coeff_x_suffix, last_sig_coeff_y_suffix, sb_coded_flag, sig_coeff_flag, abs_level_gt1_flag, par_level_flag, abs_level_gt3_flag, abs_remainder, coeff_sign_flag, and dec_abs_level.

Specifically, for example, the residual information can include information representing the prefix of the column position of the last significant coefficient in the scanning order within the transform block, information representing the prefix of the row position of the last significant coefficient in the scanning order within the transform block, information representing the suffix of the column position of the last significant coefficient in the scanning order within the transform block, and information representing the suffix of the row position of the last significant coefficient in the scanning order within the transform block. The syntax elements for this information can be last_sig_coeff_x_prefix, last_sig_coef_y_prefix, last_sig_coeff_x_suffix, and last_sig_coeff_y_suffix.

Additionally, for example, the residual information can include context syntax elements coded based on context. For instance, the context syntax elements can include a significant coefficient flag indicating whether the transform coefficient is a non-zero transform coefficient, a parity level flag for the parity of the transform coefficient level for the transform coefficient, a first transform coefficient level flag indicating whether the transform coefficient level is greater than the first threshold, and a second transform coefficient level flag indicating whether the transform coefficient level of the transform coefficient is greater than the second threshold. Here, the significant coefficient flag can be the sig_coeff_flag, the parity level flag can be the par_level_flag, the first transform coefficient level flag can be the abs _level_gtx flag[n][0], and the second transform coefficient level flag can be the abs_level_gtx_flag[n][1].

Additionally, for example, the bitstream can include position information representing the position of the last significant coefficient of the current block.

Meanwhile, the bitstream can include prediction information for the current block. The prediction information can include information on an inter prediction mode or an intra prediction mode performed on the current block.

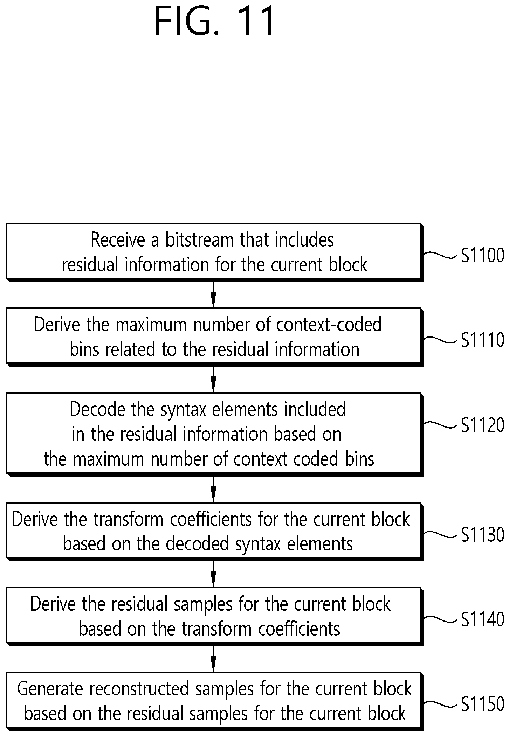

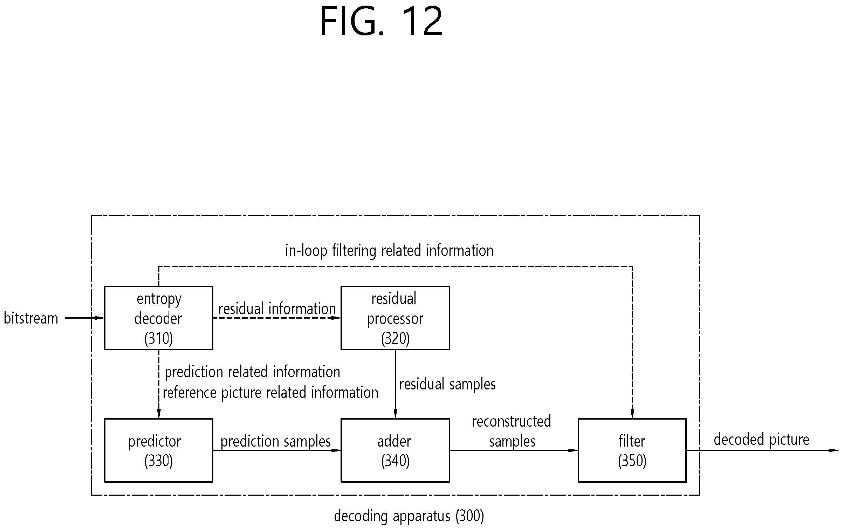

FIG. 11 and FIG. 12 schematically illustrates an example of a video/image decoding method and related components according to an embodiment of the present disclosure.

The method disclosed in FIG. 11 may be performed by the decoding apparatus disclosed in FIG. 3 or FIG. 12. Specifically, for example, S1100 to S1120 of FIG. 11 may be performed by the entropy decoding unit (310) of the decoding apparatus, S1130 to S1140 may be performed by the residual processing unit (320) of the decoding apparatus, and S1150 may be performed by the adder unit (340) of the decoding apparatus. Additionally, although not shown in FIG. 11, the process of generating a prediction sample may be performed by the prediction unit of the decoding apparatus, and the process of generating a reconstructed sample based on the prediction sample and residual sample may be performed by the adder unit of the decoding apparatus. Furthermore, the method disclosed in FIG. 11 may include the embodiments described above in this document.

Referring to FIG. 11, the decoding apparatus receives a bitstream that includes residual information for the current block (S1100). For example, the decoding apparatus may receive image information that includes residual information according to the aforementioned embodiments.

For example, the residual information can include syntax elements such as last_sig_coeff_x_prefix, last_sig_coef_y_prefix, last_sig_coeff_x_suffix, last_sig_coeff_y_suffix, sb_coded_flag, sig_coeff_flag, abs_level_gt1_flag, par_level flag, abs_level_gt3_flag, abs_remainder, coeff_sign_flag, and dec_abs_level.

Specifically, for example, the residual information can include information representing the prefix of the column position of the last significant coefficient in the scanning order within the transform block, information representing the prefix of the row position of the last significant coefficient in the scanning order within the transform block, information representing the suffix of the column position of the last significant coefficient in the scanning order within the transform block, and information representing the suffix of the row position of the last significant coefficient in the scanning order within the transform block. The syntax elements for this information can be last_sig_coeff_x_prefix, last_sig_coef_y_prefix, last_sig_coeff_x_suffix, and last_sig_coeff_y_suffix.

Additionally, for example, the residual information can include syntax elements coded based on context. For instance, the syntax elements can include a significant coefficient flag indicating whether the transform coefficient is a non-zero transform coefficient, a parity level flag for the parity of the transform coefficient level for the transform coefficient, a first transform coefficient level flag indicating whether the transform coefficient level is greater than the first threshold, and a second transform coefficient level flag indicating whether the transform coefficient level of the transform coefficient is greater than the second threshold. Here, the significant coefficient flag can be the sig_coeff_flag, the parity level flag can be the par_level_flag, the first transform coefficient level flag can be the abs_level_gtx_flag[n][0], and the second transform coefficient level flag can be the abs_level_gtxflag[n][1].

Additionally, for example, the bitstream can include position information representing the position of the last significant coefficient of the current block. At this time, the position of the last significant coefficient can be derived based on the position information.

Meanwhile, the bitstream can include prediction information for the current block. The prediction information can include information on an inter prediction mode or an intra prediction mode for the current block. The decoding apparatus can perform inter prediction or intra prediction for the current block based on the prediction information received through the bitstream, and it can derive the prediction samples of the current block.

The decoding apparatus derives the maximum number of context-coded bins related to the residual information (S1110). For example, the decoding apparatus can derive the maximum number of context coded bins related to the residual information according to the aforementioned embodiments. For instance, the maximum number of context coded bins may be derived based on the position of the last significant coefficient of the current block.

For example, the maximum number of context coded bins can be derived based on whether the position of the last significant coefficient is less than the threshold.

For example, if the position of the last significant coefficient is less than the threshold, the maximum number of context-coded bins can be derived based on the threshold. In this case, the maximum number of context coded bins related to the residual information can be derived based on the aforementioned equation 8. In other words, the maximum number of context coded bins can be derived by multiplying the threshold by c. At this time, in equation 8, c may be 1.75, but it is not limited to this value, as c can be another real number.

Additionally, if the position of the last significant coefficient is less than the threshold, the maximum number of context coded bins can be derived based on the position value of the last significant coefficient. In this case, the maximum number of context coded bins related to the residual information can be derived based on the aforementioned equation 9. In other words, the maximum number of context coded bins can be derived by multiplying a value of the position value of the last significant coefficient plus 1 by c. At this time, in equation 9, c can be 1.75, but it is not limited to this value, and c can be another real number.

In contrast, based on the position of the last significant coefficient being greater than or equal to the threshold, the maximum number of context coded bins can be derived based on the width of the transform block and the height of the transform block.

Here, in comparing the position of the last significant coefficient with the threshold, various methods can be used. For example, the position of the last significant coefficient can be represented by the x-coordinate or y-coordinate. In other words, the position x-coordinate or y-coordinate of the last significant coefficient can be compared with the threshold value. Additionally, for example, it can be represented as the sum of the position x-coordinate and y-coordinate of the last significant coefficient. In other words, the sum of the x-coordinate and y-coordinate of the position of the last significant coefficient can be compared to the threshold. Furthermore, the position of the last significant coefficient can also be represented using the LastSigCoeffScanIdx. In other words, the position of the last significant coefficient, LastSigCoeffScanIdx, can be compared to the threshold.

The decoding apparatus decodes the syntax elements included in the residual information based on the maximum number of context coded bins (S1120). For example, the decoding apparatus can decode the syntax elements included in the residual information based on the maximum number of context coded bins according to the aforementioned embodiments.

For instance, it can decode a significant coefficient flag indicating whether the transform coefficient is a non-zero transform coefficient, a parity level flag for the parity of the transform coefficient level for the transform coefficient, a first transform coefficient level flag indicating whether the transform coefficient level is greater than the first threshold, and a second transform coefficient level flag indicating whether the transform coefficient level of the transform coefficient is greater than the second threshold, based on the maximum number of context coded bins. Here, the significant coefficient flag can be the sig_coeff_flag, the parity level flag can be the par_level_flag, the first transform coefficient level flag can be the abs_level_gtx flag[n][0], and the second transform coefficient level flag can be the abs_level_gtx_flag[n][1].

The decoding apparatus derives the transform coefficients for the current block based on the decoded syntax elements (S1130). For example, the decoding apparatus may derive the transform coefficients for the current block based on the decoded syntax elements according to the aforementioned embodiments.

For example, the decoding apparatus can determine the values of the transform coefficients based on the values of the decoded syntax elements. Additionally, for example, the residual information may include sign information representing the sign of the transform coefficients. The decoding apparatus can derive the sign of the transform coefficients based on the sign information. For instance, the decoding apparatus can derive the transform coefficients based on the value of the transform coefficient and the sign.

The decoding apparatus derives the residual samples for the current block based on the transform coefficients (S1140). For example, the decoding apparatus may derive the residual samples for the current block based on the transform coefficients according to the aforementioned embodiments.

The decoding apparatus generates reconstructed samples for the current block based on the residual samples for the current block (S1150). For example, the decoding apparatus may generate reconstructed samples for the current block based on the residual samples for the current block according to the aforementioned embodiments.

For example, the decoding apparatus can derive prediction samples for the current block by performing inter prediction mode or intra prediction mode based on the prediction information received through the bitstream, and it can generate the reconstructed picture by adding the prediction samples and the residual samples. For instance, the prediction information can include information representing the intra prediction mode of the current block. Alternatively, the prediction information can include motion-related information for the current block.

According to the aforementioned document, more efficient coding can be performed by determining the context model based on the position of the last significant coefficient (the last non-zero transform coefficient). Specifically, if the position of the last significant coefficient is less than a threshold, the maximum number of context-coded bins can be determined using the threshold. Additionally, if the position of the last significant coefficient is less than the threshold, the maximum number of context-coded bins can be determined using the value representing the position of the last significant coefficient. Therefore, compared to conventional technology, the number of maximum context coded bins can be limited, improving the throughput of residual coding or enhancing overall coding efficiency.

As previously mentioned, the decoding apparatus can apply in-loop filtering procedures, such as SAO procedures, and/or deblocking filtering to the reconstructed picture to enhance subjective/objective image quality as needed.

For example, the decoding apparatus may decode a bitstream or encoded information to obtain image information including all or some of the above information (or syntax elements). In addition, the bitstream or encoded information may be stored in a computer-readable storage medium, and may cause the above-described decoding method to be performed.

In the above-described embodiment, the methods are described based on the flowchart having a series of steps or blocks. The disclosure is not limited to the order of the above steps or blocks. Some steps or blocks may occur simultaneously or in a different order from other steps or blocks as described above. Further, those skilled in the art will understand that the steps shown in the above flowchart are not exclusive, that further steps may be included, or that one or more steps in the flowchart may be deleted without affecting the scope of the present disclosure.

The above-described method according to the embodiments of this document may be implemented in the form of software, and the encoding apparatus and/or decoding apparatus according to this document may be included in, for example, a TV, computer, smartphone, set-top box, display device, etc. that that performs the processing.

When the embodiments in this document are implemented as software, the above-described method may be implemented as a module (process, function, etc.) that performs the above-described functions. A module can be stored in memory and executed by a processor. The memory may be internal or external to the processor, and may be coupled with the processor in a variety of well-known means. A processor may include an application-specific integrated circuit (ASIC), other chipsets, logic circuits, and/or data processing devices. Memory may include read-only memory (ROM), random access memory (RAM), flash memory, memory cards, storage media, and/or other storage devices. That is, the embodiments described in this document may be implemented and performed on a processor, microprocessor, controller, or chip. For example, functional units shown in each drawing may be implemented and performed on a computer, processor, microprocessor, controller, or chip. In this case, information for implementation (eg, information on instructions) or an algorithm may be stored in a digital storage medium.

In addition, the decoding apparatus and the encoding apparatus to which the present disclosure is applied may be included in a multimedia broadcasting transmission/reception apparatus, a mobile communication terminal, a home cinema video apparatus, a digital cinema video apparatus, a surveillance camera, a video chatting apparatus, a real-time communication apparatus such as video communication, a mobile streaming apparatus, a storage medium, a camcorder, a VOD service providing apparatus, an Over the top (OTT) video apparatus, an Internet streaming service providing apparatus, a three-dimensional (3D) video apparatus, a virtual reality (VR) apparatus, an augmented reality (AR) apparatus, a teleconference video apparatus, a transportation user equipment (e.g., vehicle(including autonomous vehicles) user equipment, an airplane user equipment, a ship user equipment, etc.) and a medical video apparatus and may be used to process video signals and data signals. For example, the Over the top (OTT) video apparatus may include a game console, a blue-ray player, an internet access TV, a home theater system, a smart phone, a tablet PC, a Digital Video Recorder (DVR), and the like.

Furthermore, the processing method to which the embodiment(s) present disclosure is applied may be produced in the form of a program that is to be executed by a computer and may be stored in a computer-readable recording medium. Multimedia data having a data structure according to the embodiment(s) of the present disclosure may also be stored in computer-readable recording media. The computer-readable recording media include all types of storage devices in which data readable by a computer system is stored. The computer-readable recording media may include a BD, a Universal Serial Bus (USB), ROM, PROM, EPROM, EEPROM, RAM, CD-ROM, a magnetic tape, a floppy disk, and an optical data storage device, for example. Furthermore, the computer-readable recording media includes media implemented in the form of carrier waves (e.g., transmission through the Internet). In addition, a bit stream generated by the encoding method may be stored in a computer-readable recording medium or may be transmitted over wired/wireless communication networks.

In addition, the embodiment(s) of the present disclosure may be implemented with a computer program product according to program codes, and the program codes may be performed in a computer by the embodiment(s) of the present disclosure. The program codes may be stored on a carrier which is readable by a computer.

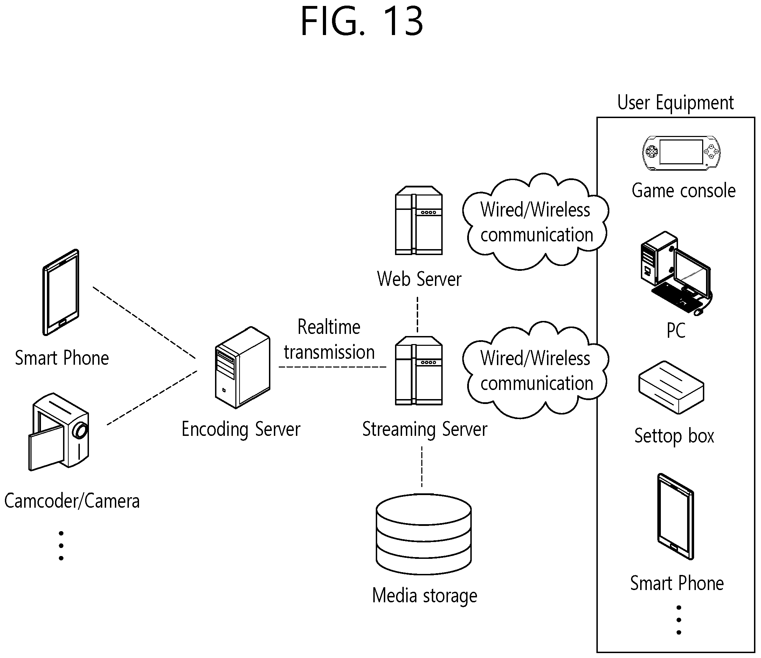

FIG. 13 illustrates an example of a content streaming system to which embodiments disclosed in the present disclosure may be applied.

Referring to FIG. 13, the content streaming system to which the embodiments of the present disclosure are applied may broadly include an encoding server, a streaming server, a web server, a media storage, a user apparatus, and a multimedia input apparatus.

The encoding server compresses content input from multimedia input devices such as a smartphone, a camera, a camcorder, etc. Into digital data to generate a bitstream and transmit the bitstream to the streaming server. As another example, when the multimedia input devices such as smartphones, cameras, camcorders, etc. directly generate a bitstream, the encoding server may be omitted.

The bitstream may be generated by an encoding method or a bitstream generating method to which the embodiment(s) of the present disclosure is applied, and the streaming server may temporarily store the bitstream in the process of transmitting or receiving the bitstream.

The streaming server transmits the multimedia data to the user device based on a user's request through the web server, and the web server serves as a medium for informing the user of a service. When the user requests a desired service from the web server, the web server delivers it to a streaming server, and the streaming server transmits multimedia data to the user. In this case, the content streaming system may include a separate control server. In this case, the control server serves to control a command/response between devices in the content streaming system.

The streaming server may receive content from a media storage and/or an encoding server. For example, when the content is received from the encoding server, the content may be received in real time. In this case, in order to provide a smooth streaming service, the streaming server may store the bitstream for a predetermined time.

Examples of the user device may include a mobile phone, a smartphone, a laptop computer, a digital broadcasting terminal, a personal digital assistant (PDA), a portable multimedia player (PMP), navigation, a slate PC, tablet PCs, ultrabooks, wearable devices (ex. Smartwatches, smart glasses, head mounted displays), digital TVs, desktops computer, digital signage, and the like.

Each server in the content streaming system may be operated as a distributed server, in which case data received from each server may be distributed.

The claims described in the present disclosure may be combined in various ways. For example, the technical features of the method claims of the present disclosure may be combined to be implemented as an apparatus, and the technical features of the apparatus claims of the present disclosure may be combined to be implemented as a method. In addition, the technical features of the method claim of the present disclosure and the technical features of the apparatus claim may be combined to be implemented as an apparatus, and the technical features of the method claim of the present disclosure and the technical features of the apparatus claim may be combined to be implemented as a method.

**Claims**

1. A method for an image decoding, the method performed by a decoding apparatus and comprising:

   receiving a bitstream including residual information for a current block;
   deriving a maximum number of context coded bins related to the residual information;
   decoding syntax elements included in the residual information based on the maximum number of context coded bins;
   deriving transform coefficients for the current block based on the decoded syntax elements;
   deriving residual samples for the current block based on the transform coefficients; and
   generating reconstructed samples for the current block based on the residual samples for the current block,
   wherein the maximum number of context coded bins is derived based on a position of a last significant coefficient of the current block.

2. The method of claim 1, wherein the syntax elements include a significant coefficient flag representing whether a transform coefficient is a non-zero transform coefficient, a parity level flag for parity of a transform coefficient level for the transform coefficient, a first transform coefficient level flag for whether the transform coefficient level is greater than a first threshold and a second transform coefficient level flag for whether the transform coefficient level of the transform coefficient is greater than a second threshold.

3. The method of claim 2, wherein the bitstream includes position information representing the position of the last significant coefficient of the current block,
   wherein, the position of the last significant coefficient is derived based on the position information.

4. The method of claim 3, wherein a specific number is derived based on whether the position of the last significant coefficient is less than a threshold.

5. The method of claim 4, wherein, based on the position of the last significant coefficient being less than the threshold, the maximum number of context coded bins is derived based on the threshold.

6. The method of claim 5, wherein the maximum number of context coded bins is derived through an equation below,

$$MaxCCB = ThPos \times c$$

   where MaxCCB represents the maximum number of context coded bins, ThPos represents the threshold, and c represents a real number.

7. The method of claim 4, wherein, based on the position of the last significant coefficient being less than the threshold, the maximum number of context coded bins is derived based on a position value of the last significant coefficient.

8. The method of claim 7, wherein the maximum number of context coded bins is derived through an equation below,

$$MaxCCB = (LastSigCoeffScanIdx + 1) \times c$$

   where MaxCCB represents the maximum number of context coded bins, LastSigCoeffScanIdx represents a position value of a last non-zero transform coefficient, and c represents a real number.

9. The method of claim 6 or 8, wherein the c is 1.75.

10. The method of claim 4, wherein, based on the position of the last significant coefficient being equal to or greater than the threshold, the maximum number of context coded bins is derived based on a width of a transform block and a height of the transform block.

11. A method for an image encoding, the method performed by an encoding apparatus and comprising:

deriving residual samples for a current block;
deriving transform coefficients based on the residual samples for the current block;
deriving a maximum number of context coded bins for syntax elements for the transform coefficients; and
generating a bitstream by encoding residual information for the current block including the syntax elements based on the maximum number of context coded bins,
wherein the maximum number of context coded bins is derived based on a position of a last significant coefficient of the current block.

12. The method of claim 11, wherein the syntax elements include a significant coefficient flag representing whether a transform coefficient is a non-zero transform coefficient, a parity level flag for parity of a transform coefficient level for the transform coefficient, a first transform coefficient level flag for whether the transform coefficient level is greater than a first threshold and a second transform coefficient level flag for whether the transform coefficient level of the transform coefficient is greater than a second threshold.

13. The method of claim 11, wherein the bitstream includes position information representing the position of the last significant coefficient of the current block.

14. The method of claim 11, wherein the maximum number of context coded bins is derived based on whether the position of the last significant coefficient is less than a threshold.

15. The method of claim 14, wherein, based on the position of the last significant coefficient being less than the threshold, the maximum number of context coded bins is derived based on the threshold.

16. The method of claim 15, wherein the maximum number of context coded bins is derived through an equation below,

$$MaxCCB = ThPos \times c$$

where MaxCCB represents the maximum number of context coded bins, ThPos represents the threshold, and c represents a real number.

17. The method of claim 14, wherein, based on the position of the last significant coefficient being less than the threshold, the maximum number of context coded bins is derived based on a position value of the last significant coefficient.

18. The method of claim 17, wherein the maximum number of context coded bins is derived through an equation below,

$$MaxCCB = (LastSigCoeffScanIdx + 1) \times c$$

where MaxCCB represents the maximum number of context coded bins, LastSigCoeffScanIdx represents the position value of the last significant coefficient, and c represents a real number.

19. A computer-readable storage medium, in which a bitstream generated by the image encoding method of claim 11 is stored.

20. A method for transmitting data for an image, the method comprising:

obtaining a bitstream for the image, wherein the bitstream is generated based on deriving residual samples for a current block, deriving transform coefficients based on the residual samples for the current block, deriving a number of context coded bins for syntax elements for the transform coefficients and encoding residual information for the current block including the syntax elements based on the maximum number of context coded bins; and
transmitting the data including the bitstream,

wherein the maximum number of context coded bins is derived based on a position of a last significant coefficient of the current block

# FIG. 1

```
┌─────────────────────┐          ┌─────────────────────┐
│      SOURCE         │          │      RECEIVE        │
│      DEVICE         │          │      DEVICE         │
│  ┌──────────────┐   │          │  ┌──────────────┐   │
│  │    VIDEO     │   │          │  │   RENDERER   │   │
│  │   SOURCE     │   │          │  └──────────────┘   │
│  └──────────────┘   │          │         ▲           │
│         │           │          │  ┌──────────────┐   │
│         ▼           │          │  │   DECODING   │   │
│  ┌──────────────┐   │          │  │  APPARATUS   │   │
│  │   ENCODING   │   │          │  └──────────────┘   │
│  │  APPARATUS   │   │          │         ▲           │
│  └──────────────┘   │          │  ┌──────────────┐   │
│         │           │          │  │   RECEIVER   │   │
│         ▼           │          │  └──────────────┘   │
│  ┌──────────────┐   │          │                     │
│  │ TRANSMITTER  │───┼──────────┼──▶                  │
│  └──────────────┘   │          │                     │
└─────────────────────┘          └─────────────────────┘
```

FIG. 2

# FIG. 3

EP 4 503 607 A1

# FIG. 4

VCL (video coding layer)

| Slice header (tile group header) | Slice data (tile group data) |
|---|---|

Parameter set

SEI message

NAL (network abstract layer)

| NAL unit header | Slice header | Slice data |
|---|---|---|

| NAL unit header | Parameter set |
|---|---|

| NAL unit header | SEI message |
|---|---|

VCL NAL unit

Non-VCL NAL unit

File format of predetermined standard/RTP/TS

system

EP 4 503 607 A1

# FIG. 5

# FIG. 6

# FIG. 7

EP 4 503 607 A1

```
                              ╱╲
                             ╱  ╲
                            ╱    ╲
                           ╱ The position of the last ╲
        ┌─────────────────  significant coefficient within the transform  
        │                  ╲ block < ThPos ╱
        │                   ╲    ╱
        │                    ╲  ╱
        │                     ╲╱
        │                      │
        ▼                      ▼
```

| The method of controlling the context coded bins based on the size of the transform block<br>MaxCCB = TBWidth x TBHeight x c | The method of controlling the context coded bins based on the position of last significant coefficient in the transform block<br>MaxCCB = ThPos x c |

# FIG. 8

```
                              ┌─────────────────────────────┐
                              │   The position of the last  │
                              │ significant coefficient within the transform │
                              │        block < ThPos        │
                              └─────────────────────────────┘
```

The method of controlling the context coded bins based on the size of the transform block
MaxCCB = TBWidth x TBHeight x c

The method of controlling the context coded bins based on the position of last significant coefficient in the transform block
MaxCCB = (LastScanPosIdx + 1) x c

# FIG. 9

Derive the residual samples for the current block — S900

Derive the transform coefficients based on
the residual samples for the current block — S910

Derive the maximum number of
context-coded bins for the syntax elements
for the transform coefficients — S920

Generate a bitstream by encoding the residual
information for the current block,
including the syntax elements, based on
the maximum number of context coded bins — S930

# FIG. 10

encoding apparatus (200)

EP 4 503 607 A1

# FIG. 11

```
┌─────────────────────────────────────────┐
│         Receive a bitstream that includes         │ ── S1100
│   residual information for the current block      │
└─────────────────────────────────────────┘
                      │
                      ▼
┌─────────────────────────────────────────┐
│  Derive the maximum number of context-coded       │ ── S1110
│     bins related to the residual information      │
└─────────────────────────────────────────┘
                      │
                      ▼
┌─────────────────────────────────────────┐
│          Decode the syntax elements included      │ ── S1120
│            in the residual information based on    │
│      the maximum number of context coded bins     │
└─────────────────────────────────────────┘
                      │
                      ▼
┌─────────────────────────────────────────┐
│  Derive the transform coefficients for the current block │ ── S1130
│        based on the decoded syntax elements       │
└─────────────────────────────────────────┘
                      │
                      ▼
┌─────────────────────────────────────────┐
│    Derive the residual samples for the current block   │ ── S1140
│           based on the transform coefficients     │
└─────────────────────────────────────────┘
                      │
                      ▼
┌─────────────────────────────────────────┐
│  Generate reconstructed samples for the current block  │ ── S1150
│  based on the residual samples for the current block   │
└─────────────────────────────────────────┘
```

# FIG. 12

decoding apparatus (300)

# FIG. 13

Smart Phone

Camcoder/Camera

Encoding Server

Realtime transmission

Web Server

Streaming Server

Media storage

Wired/Wireless communication

Wired/Wireless communication

User Equipment

Game console

PC

Settop box

Smart Phone

EP 4 503 607 A1

## INTERNATIONAL SEARCH REPORT

| International application No. |
|---|
| **PCT/KR2023/000097** |

**A. CLASSIFICATION OF SUBJECT MATTER**

**H04N 19/13**(2014.01)i; **H04N 19/70**(2014.01)i; **H04N 19/132**(2014.01)i; **H04N 19/18**(2014.01)i; **H04N 19/176**(2014.01)i

According to International Patent Classification (IPC) or to both national classification and IPC

**B. FIELDS SEARCHED**

Minimum documentation searched (classification system followed by classification symbols)

H04N 19/13(2014.01); H04N 19/12(2014.01); H04N 19/122(2014.01); H04N 19/129(2014.01); H04N 19/61(2014.01); H04N 19/645(2014.01); H04N 19/70(2014.01); H04N 19/91(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 레지듀얼(residual), 컨텍스트(context), 코디드(coded), 빈(bin), 신택스(syntax), 변환(transform), 계수(coefficient), 마지막 유효 계수(last significant coefficient), 위치(position)

**C. DOCUMENTS CONSIDERED TO BE RELEVANT**

| Category* | Citation of document, with indication, where appropriate, of the relevant passages | Relevant to claim No. |
|---|---|---|
| X | KR 10-2020-0060397 A (LG ELECTRONICS INC.) 29 May 2020 (2020-05-29)<br>See paragraph [0182]; and figures 9-10. | 1,11,13,19-20 |
| Y | | 2-3,12 |
| A | | 4-10,14-18 |
| Y | WO 2020-253874 A1 (BEIJING BYTEDANCE NETWORK TECHNOLOGY CO., LTD. et al.) 24 December 2020 (2020-12-24)<br>See paragraph [0120]. | 2-3,12 |
| A | WO 2021-136789 A1 (FRAUNHOFER-GESELLSCHAFT ZUR FÖRDERUNG DER ANGEWANDTEN FORSCHUNG E.V.) 08 July 2021 (2021-07-08)<br>See page 1, line 33 - page 6, line 24; and claims 1-5. | 1-20 |
| A | KR 10-2022-0024658 A (ALIBABA GROUP HOLDING LIMITED) 03 March 2022 (2022-03-03)<br>See paragraphs [0006]-[0010]; and claims 1-14. | 1-20 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **31 March 2023** | **06 April 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/000097** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2021-0385499 A1 (BEIJING BYTEDANCE NETWORK TECHNOLOGY CO., LTD. et al.) 09 December 2021 (2021-12-09)<br>    See paragraphs [0004]-[0017]; and claims 1-13. | 1-20 |

Form PCT/ISA/210 (second sheet) (July 2022)

INTERNATIONAL SEARCH REPORT
Information on patent family members

International application No.

**PCT/KR2023/000097**

| Patent document cited in search report | | | Publication date (day/month/year) | Patent family member(s) | | | Publication date (day/month/year) |
|---|---|---|---|---|---|---|---|
| KR | 10-2020-0060397 | A | 29 May 2020 | AU | 2019-378514 | A1 | 03 June 2021 |
| | | | | BR | 112021007273 | A2 | 20 July 2021 |
| | | | | CA | 3119744 | A1 | 22 May 2020 |
| | | | | CN | 114390281 | A | 22 April 2022 |
| | | | | EP | 3709658 | A1 | 16 September 2020 |
| | | | | JP | 2021-510022 | A | 08 April 2021 |
| | | | | KR | 10-2022-0025268 | A | 03 March 2022 |
| | | | | US | 2020-0236403 | A1 | 23 July 2020 |
| | | | | WO | 2020-101321 | A1 | 22 May 2020 |
| WO | 2020-253874 | A1 | 24 December 2020 | CN | 113994679 | A | 28 January 2022 |
| | | | | US | 2022-0109845 | A1 | 07 April 2022 |
| WO | 2021-136789 | A1 | 08 July 2021 | CN | 115039408 | A | 09 September 2022 |
| | | | | EP | 4085638 | A1 | 09 November 2022 |
| | | | | TW | 202131681 | A | 16 August 2021 |
| | | | | US | 2023-0044030 | A1 | 09 February 2023 |
| KR | 10-2022-0024658 | A | 03 March 2022 | CN | 114679917 | A | 28 June 2022 |
| | | | | EP | 3987809 | A1 | 27 April 2022 |
| | | | | JP | 2022-538968 | A | 07 September 2022 |
| | | | | US | 2020-0404332 | A1 | 24 December 2020 |
| | | | | WO | 2020-263442 | A1 | 30 December 2020 |
| US | 2021-0385499 | A1 | 09 December 2021 | CN | 113841409 | A | 24 December 2021 |
| | | | | EP | 3949396 | A1 | 09 February 2022 |
| | | | | EP | 3949397 | A1 | 09 February 2022 |
| | | | | JP | 2022-532517 | A | 15 July 2022 |
| | | | | KR | 10-2022-0006059 | A | 14 January 2022 |
| | | | | SG | 11202111967 | A | 29 November 2021 |
| | | | | US | 2022-0417529 | A1 | 29 December 2022 |
| | | | | WO | 2020-228672 | A1 | 19 November 2020 |

Form PCT/ISA/210 (patent family annex) (July 2022)